**Europäisches Patentamt**

**European Patent Office**

**Office européen des brevets**

(11) Veröffentlichungsnummer : **0 403 476 B1**

(19)

(12)     # EUROPÄISCHE PATENTSCHRIFT

(45) Veröffentlichungstag der Patentschrift :
18.03.92 Patentblatt 92/12

(51) Int. Cl.$^5$ : **G06K 15/12**

(21) Anmeldenummer : **88905348.4**

(22) Anmeldetag : **06.06.88**

(86) Internationale Anmeldenummer :
**PCT/DE88/00335**

(87) Internationale Veröffentlichungsnummer :
**WO 89/08895 21.09.89 Gazette 89/23**

(54) OPTISCHER ZEICHENGENERATOR FÜR EINEN ELEKTROFOTOGRAFISCHEN DRUCKER.

(30) Priorität : **11.03.88 DE 3808219**

(43) Veröffentlichungstag der Anmeldung :
**27.12.90 Patentblatt 90/52**

(45) Bekanntmachung des Hinweises auf die
Patenterteilung :
**18.03.92 Patentblatt 92/12**

(84) Benannte Vertragsstaaten :
**DE FR GB IT NL SE**

(56) Entgegenhaltungen :
**GB-A- 2 099 221**
**US-A- 4 096 486**
**US-A- 4 435 064**
**US-A- 4 571 602**
**Patent Abstracts of Japan, vol. 9, no. 60**
**(M-364) (1783), 16 March 1985**

(56) Entgegenhaltungen :
**Design Engineering, July 1985, (London, GB),**
**"LED-flushing - an alternative printer techno-**
**logy", pages 39, 40, 44, see page 44, column 2,**
**line 23 - column 3, end**
**IEEE Transactions on Consumer Electronics,**
**vol. CE-32, No. 1, February 1986, IEEE, (New**
**York, US), J. Burkhart et al.: "A monolithically**
**integrated 128 LED-driver and its application",**
**pages 26-31 (cited in the application)**

(73) Patentinhaber : **Siemens Nixdorf**
**Informationssysteme AG**
**Otto-Hahn-Ring 6**
**W-8000 München 83 (DE)**

(72) Erfinder : **FLECK, Friedrich**
**Leopoldstrasse 202**
**W-8000 München 40 (DE)**
Erfinder : **JÖRGENS, Klaus-Dieter**
**Rossinistrasse 11**
**W-8011 Baldham (DE)**

(74) Vertreter : **Fuchs, Franz-Josef, Dr.-Ing. et al**
**Postfach 22 13 17**
**W-8000 München 22 (DE)**

EP 0 403 476 B1

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue Saint-Denis, 75001 PARIS

## Beschreibung

Optischer Zeichengenerator für einen elektrofotografischen Drucker

Die Erfindung bezieht sich auf einen optischen Zeichengenerator für einen elektrofotografischen Drucker gemäß dem Oberbegriff des Patentanspruches 1.

Nach dem Prinzip der Elektrofotografie arbeitende Drucker enthalten einen optischen Zeichengenerator. Mit diesem Zeichengenerator wird eine in Form von elektronischen Daten vorliegende Druckinformation in ein optisches Bild umgesetzt, mit dem dann eine fotoleitende Schicht, beispielsweise einer kontinuierlich umlaufenden Ladungsspeichertrommel des Druckers belichtet wird, um ein latentes Ladungsbild zu erzeugen. Dieses Ladungsbild wird in bekannter Weise entwickelt und beispielsweise auf Papier umgedruckt.

Von Vorteil für diese Anwendung sind optische Zeichengeneratoren, die die Ladungsspeichertrommel zeilenförmig in voller Länge belichten, da dann der Belichtungsvorgang ohne eine mechanische Bewegung ausgeführt werden kann. Ein solcher zeilenförmiger Aufbau des optischen Zeichengenerators bedingt für jeden Abbildungspunkt innerhalb der Zeile eine eigene Lichtquelle. Vorzugsweise werden Leuchtdioden als Lichtquellen eingesetzt, da diese Bauelemente die Möglichkeit einer sehr kompakten Anordnung bieten.

Angestrebt wird mit derartigen Druckern eine hohe Qualität des Druckbildes. Voraussetzung dafür ist ein entsprechendes Rastermaß, 240 dpi (= dots per inch) und mehr sind für elektrofotografische Drucker durchaus nicht ungewöhnlich. Ein zeilenförmig aufgebauter optischer Zeichengenerator für einen elektrofotografischen Drucker enthält daher eine Vielzahl von Leuchtdioden, oft mehrere 1000. Dementsprechend komplex ist die Ansteuerung der Leuchtdioden, die in Abhängigkeit von der dem optischen Zeichengenerator zugeführten Druckinformation individuell geschaltet werden müssen. Aus IEEE Transaction on Consumer Electronics, Vol. CE-32, Nr. 1, Febr. 1986, Seiten 26 ff. ist ein optischer Zeichengenerator bekannt, bei dem eine monolithisch aufgebaute Leuchtdiodenzeile über eine Mehrzahl von zu beiden Seiten dieser Leuchtdiodenzeile angeordneten Ansteuerbausteinen in Form von integrierten Schaltkreisen angesteuert wird. Dieser bekannte optische Zeichengenerator ist für Anwendungen bei elektrofotografischen Druckern mit einer Druckleistung von etwa einem DIN A4 Blatt pro Sekunde konzipiert, was einer Zeilenfrequenz von etwa 3 kHz entspricht. Dies erfordert eine Datenrate von etwa 8 MBit/s, bei insgesamt acht parallelen Datenkanälen ergibt sich so eine Datentaktfrequenz von 1 MHz.

Neben Datenregistern enthalten die-Ansteuerbausteine eine integrierte Treiberschaltung mit einer Vielzahl von Treiberstufen, die jeweils einer der Leuchtdioden zugeordnet sind. Die Treiberschaltung besitzt eine bausteinbezogen abgleichbare Stromquelle, an die parallel die Treiberstufen angeschlossen sind. Die Treiberstufen sind derart ausgestaltet, daß der über die einzelne Stufe fließende Treiberstrom entweder die zugeordnete Leuchtdiode aktiviert oder über eine Masseverbindung abfließt. Als Vorteil dieser Lösung wird angesehen, daß die gesamte Strombelastung im optischen Zeichengenerator unabhängig von dem jeweiligen Druckbild zeitlich konstant bleibt.

Man muß sich aber verdeutlichen, daß bei mehreren 1000 Leuchtdioden und einer entsprechenden Anzahl von Treiberstufen in dem optischen Zeichengenerator ganz erhebliche Ströme fließen und die gesamte thermische Belastung bei dem kompakten. Aufbau deshalb sehr hoch ist. Bei der bekannten Lösung wird diese thermische Belastung zwar im Mittel konstant gehalten, jedoch wird dieser Vorteil damit erkauft, daß ein nicht unerheblicher Teil der von den Stromquellen gelieferten Ströme nutzlos unmittelbar über Masse abgeführt wird, was weitere, an sich vermeidbare Wärme erzeugt.

Alle Treiberstufen der bekannten Lösung werden darüber hinaus gemeinsam über ein Strobe-Signal aktiviert und für eine Periode dieses Signales im aktiven Zustand gehalten. Bekanntlich streuen aber die Lichtausbeuten von Leuchtdioden, was bedeutet, daß die während eines vorbestimmten Zeitraumes abgegebene Strahlungsenergie für jede Leuchtdiode ein individueller Wert ist. Daraus folgt, daß die auf der Ladungsspeichertrommel in Bildpunkten auftreffende Strahlungsenergie unterschiedlich ist, was die Druckqualität nachteilig beeinflußt.

Schließlich ist für nach dem elektrofotografischen Prinzip arbeitende Hochleistungsdrucker ein Mehrfaches der genannten Zeilenfrequenz erforderlich, vorzugsweise sollen auch verschiedene Papierformate zu verarbeiten sein. Dafür reicht ein optischer Zeichengenerator mit einer Zeilenlänge, die dem Querformat einer DIN A4-Seite entspricht, nicht aus. Um Papiere im DIN A3-Format bedrucken zu können, muß der optische Zeichengenerator mindestens eine Zeilenlänge haben, die der Länge einer Längsseite eines DIN A4-Blattes entspricht. Bei solchen Randbedingungen läßt sich aber der optische Zeichengenerator nicht mehr nach der Lehre der bekannten Lösung aufbauen.

Aus US-A-4,571,602 ist weiterhin ein modular aufgebauter optischer Zeichengenerator für einen elektrofotografischen Zeilendrucker bekannt, dessen Module jeweils mehrere Leuchtdiodenbausteine sowie die zugehörige Ansteuerungsschaltung enthalten. Um ein entsprechendes Rastermaß der Mikrobildpunkte zu erreichen, sind die Leuchtdioden in zwei untereinanderliegenden Zeilen angeordnet. Dabei sind die Leucht-

dioden einer Zeile gegenüber denen der anderen Zeile jeweils um einen Mittenabstand in Zeilenrichtung versetzt. Somit besteht das Problem, die Ansteuerung der Leuchtdiodender beiden, quer zur Zeilenrichtung geometrisch zueinander versetzten Leuchtdiodenzeilen zu synchronisieren, obwohl die allen Bildpunkten einer Mikrobildzeile entsprechende Druckinformation in einem Druckzyklus bitweise seriell von einer Druckersteuerung übertragen wird.

Um dieses Problem zu lösen, ist jeder Leuchtdiodenzeile eine eigene Schieberegisterkette zugeordnet, in die bitweise und in zyklischem Wechsel die übertragene Druckinformation eingespeichert wird. Nach dem Übertragungsvorgang enthält die eine Schieberegisterkette die Druckinformation für alle geradzahligen Bildpunkte, die andere Schieberegisterkette die Druckinformation für alle ungeradzahligen Bildpunkte ein und derselben Mikrobildzeile. Beim anschließenden Druckvorgang wird die Druckinformation aus einer der beiden Schieberegisterketten parallel ausgelesen und unmittelbar in Treiberbausteine für die Leuchtdioden der einen Diodenzeile übertragen, so daß damit beispielsweise alle geradzahligen Bildpunkten zugeordneten Leuchtdioden gleichzeitig, jedoch individuell aktiviert werden.

Zur gleichen Zeit werden auch die den ungeradzahligen Bildpunkten zugeordneten Leuchtdioden der anderen Diodenzeile in gleicher Weise aktiviert. Den geometrischen Versatz der beiden Diodenzeilen zueinander berücksichtigend, werden die Leuchtdioden der zweiten Diodenzeile jedoch aufgrund von einer Druckinformation für eine Mikrobildzeile angesteuert, deren geradzahlige Bildpunkte bereits eine vorbestimmte Anzahl von Druckzyklen früher generiert wurden. Dazu sind Verzögerungsschaltungen zwischen der zweiten Schieberegisterkette und den Treiberschaltungen für die zweite Diodenzeile eingefügt. In diesen Verzögerungsschaltungen wird der Informationstransport durch ein den Druckzyklus synchronisierendes Taktsignal so gesteuert, daß der Druckvorgang für geradzahlige und ungeradzahlige Bildpunkte zweier verschiedener Bildzeilen gleichzeitig erfolgt.

Daraus ergibt sich aufgrund der Vielzahl der angesteuerten Leuchtdioden in einem kurzen Zeitraum eine erhebliche impulsartige Strombelastung des optischen Zeichengenerators in Form der Summe der auftretenden Treiberströme. Die mittlere Strombelastung ist proportional der Zeilenlänge des optischen Zeichengenerators und umgekehrt proportional zur Rasterweite der Mikrobildpunkte.

In GB-A-2 099 221 schließlich ist für einen derartigen optischen Zeichengenerator insbesondere die Technologie beschrieben, die es ermöglicht, dicht gepackte Module aus LED-Bausteinen und Ansteuer- sowie Treiberbausteinen kostengünstig und betriebssicher aufzubauen. Lösungen für die Bewältigung des Problems der durchschnittlichen Strombelastung bei optischen Zeichengeneratoren hoher Packungsdichte sind dabei nicht angesprochen.

Der vorliegenden Erfindung liegt daher die Aufgabe zugrunde, einen optischen Zeichengenerator gemäß dem Oberbegriff des Patentanspruches 1 zu schaffen, der für eine Verwendung in Hochleistungsdruckern geeignet ist, d. h. auch bei einer erheblichen Länge der Leuchtdiodenzeile mit hoher Zeilenfrequenz betrieben werden kann. Neben einer angepaßten Lösung für die Übernahme der Druckinformation in den Zeichengenerator erfordert dies auch eine Minimisierung der im zeitlichen Mittel fließenden Ansteuerströme, um so die thermische Belastung im Zeichengenerator beherrschen zu können.

Bei einem optischen Zeichengenerator der genannten Art wird diese Aufgabe erfindungsgemäß durch die im Kennzeichen des Patentanspruches 1 beschriebenen Merkmale gelöst. Dabei wird davon ausgegangen; daß zwar die Druckgeschwindigkeit durch Erhöhung der Datenübertragungsrate zu steigern ist, jedoch die notwendige Zeilenfrequenz beim Druck durch serielles Laden der Ansteuerbausteine dennoch nicht erreichbar ist. Andererseits ist die maximale Anschaltdauer der Leuchtdioden durch die erforderliche Strahlungsenergie zum Erzeugen des entsprechenden Ladungsbildes auf der Ladungsspeichertrommel vorgegeben.

Bei der erfindungsgemäßen Lösung wird daher ein von dem Prinzip konventioneller optischer Zeichengeneratoren für elektrofotografische Drucker abweichendes Konzept verwirklicht. Zunächst wird bei der geometrischen Anordnung der Leuchtdioden von der streng linearen Anordnung abgegangen. Die Leuchtdioden jedes Leuchtdiodenbausteines werden in mehrere Gruppen unterteilt, wobei alle Leuchtdioden einer Gruppe längs einer Linie angeordnet sind. Die einzelnen Gruppen jedoch sind in der Richtung quer zur Diodenzeile geometrisch zueinander versetzt angeordnet. Dieser geometrische Versatz ermöglicht es, Teile einer Mikrozeile auf der Ladungsspeichertrommel zu unterschiedlichen Zeiten zu generieren, da voraussetzungsgemäß die Ladungsspeichertrommel kontinuierlich umläuft.

Aufgrund dieser besonderen geometrischen Anordnung der Leuchtdioden können die Anschaltzeiten aller Leuchtdioden des optischen Zeichengenerators über einen längeren Zeitraum im Verarbeitungszyklus verteilt werden. Damit sinkt die mittlere Strombelastung, was insbesondere auch dann zu einer verringerten thermischen Belastung führt, wenn die gleichzeitig aktivierten Gruppen von Leuchtdioden möglichst gleichmäßig über die gesamte Länge des optischen Zeichengenerators flächenhaft verteilt sind. Außerdem schafft diese Geometrie der Anordnung der Leuchtdioden die Voraussetzung dafür, die Vorgänge für die Übernahme der Druckinformation in Speicher der Ansteuerbausteine und für die Ableitung von Ansteuersignalen für die Treiber der Leuchtdioden zeitlich zu staffeln, wobei das Anschalten der Leuchtdioden von dem Ladevorgang für die Druckinformation völlig entkoppelt ist.

Diese Entkopplung der Datenübernahme von der Verarbeitung der gespeicherten Daten erlaubt diese Datenverarbeitung flexibel durchzuführen. So kann die von jeder Leuchtdiode abgegebene Strahlungsenergie durch individuelle Ansteuerung und Anschaltzeit jeder Leuchtdiode konstant gehalten werden, obwohl dieser individuelle Abgleich für eine Vielzahl vor Leuchtdioden durchgeführt werden muß. Das zeitliche Staffeln der notwendigen Abläufe ermöglicht auch in diesem Fall angemessen kurze Verarbeitungszyklen, d. h. die geforderte hohe Zeilenfrequenz. Die zeitlich gestaffelte Verarbeitung der Daten erfordert ein internes Zeitraster im optischen Zeichengenerator. Dies wird verwirklicht durch das in jedem Ansteuerbaustein vorgesehene Schaltwerk, das für die zeitlich gestaffelten Abläufe in dem Verarbeitungsteil des Ansteuerbausteines die internen Zeitsteuersignale liefert und die Synchronität dieser Abläufe sicherstellt.

Weiterbildungen der Erfindung sind in Unteransprüchen festgelegt, die Bedeutung dieser Weiterbildungen sowie die damit erzielten Vorteile sind in der nachfolgenden Beschreibunç eines Ausführungsbeispieles der Erfindung näher erläutert. Dieses Ausführungsbeispiel wird anhand der Zeichnung beschrieben, dabei zeigt:

FIG 1 schematisch in einem Ausschnitt die Struktur einer Druckbildmatrix mit einzelnen nach einem vorgegebenen Raster übereinander gelegten Bildpunkten eines bestimmten Durchmessers,

FIG 2 schematisch den Aufbau eines Leuchtdiodenbausteines als Teil einer Diodenleiste des optischen Zeichengenerators mit einzelnen, in Druckrichtung zueinander geometrisch versetzten Gruppen von Leuchtdioden,

FIG 3 in einem Blockschaltbild die Leuchtdiodenleiste, aufgebaut aus einer Mehrzahl von Leuchtdiodenbausteinen, diesen Leuchtdiodenbausteinen zugeordnete Ansteuer- und Treiberbausteine sowie ein Bussystem zum Übertragen von Adressen bzw. die Druckinformation darstellenden elektronischen Daten in die Ansteuerbausteine,

FIG 4 ein Blockschaltbild eines Ansteuerbausteines, aufgebaut aus einem Schaltwerk und einer Verarbeitungseinheit mit einer Mehrzahl von Teilschaltungen, die jeweils die Druckinformation für eine der Gruppen von Leuchtdioden des zugeordneten Leuchtdiodenbausteines verarbeiten,

FIG 5 ein weiter detailliertes Blockschaltbild von zwei Teilschaltungen der Verarbeitungseinheit,

FIG 6 das Schaltbild eines Zeitwertkomparators zum Generieren der individuellen Anschaltzeiten der Leuchtdioden, wobei dieser Zeitwertkomparator einen Modul innerhalb einer Teilschaltung der Verarbeitungseinheit nach FIG 5 bildet,

FIG 7 Impulsdiagramme zur Erläuterung der Funktion des Zeitwertkomparators nach FIG 6,

FIG 8 ein detaillierteres Blockschaltbild für das Schaltwerk des Ansteuerbausteines,

FIG 9 ein Schaltbild für eine Entstörlogik, die in dem Schaltwerk enthalten ist und zum Synchronisieren der Schaltwerke des optischen Zeichengenerators untereinander dient,

FIG 10 für einen Verarbeitungszyklus eine Reihe von Impulsdiagrammen wesentlicher, im Schaltwerk generierter Zeitsteuersignale,

FIG 11 ein Detailschaltbild einer ersten Decodierschaltung des Schaltwerkes zum Generieren von in FIG 10 dargestellten Zeitsteuersignalen,

FIG 12 eine Reihe von weiteren Impulsdiagrammen, in denen der zeitliche Verlauf von Zeitfenstersignalen und daraus abgeleiteten internen Taktsignalen zur Erläuterung des Schaltbildes von FIG 11 dargestellt ist,

FIG 13 ein Schaltbild eines im Schaltwerk vorgesehenen Adreßkomparators zum Erzeugen von Schreibsteuersignalen für die Teilschaltungen der Verarbeitungseinheit,

FIG 14 ein Schaltbild einer zweiten Decodierschaltung zum Generieren von weiteren Schreibsteuersignalen in einem Ladezyklus, in dem aktualisierte Korrekturwerte für die individueller Anschaltzeiten der Leuchtdioden in die einzelnen Teilschaltungen der Verarbeitungseinheiten übertragen werden und

FIG 15 ein Schaltbild für eine weitere Ausführungsform, bei der die im Zeitwertkomparator gemäß FIG 6 verarbeiteten Zeitsteuersignale aus einer separaten, zum Takt des Verarbeitungszyklus asynchronen Zeitbasistaktsignalfolge abgeleitet werden.

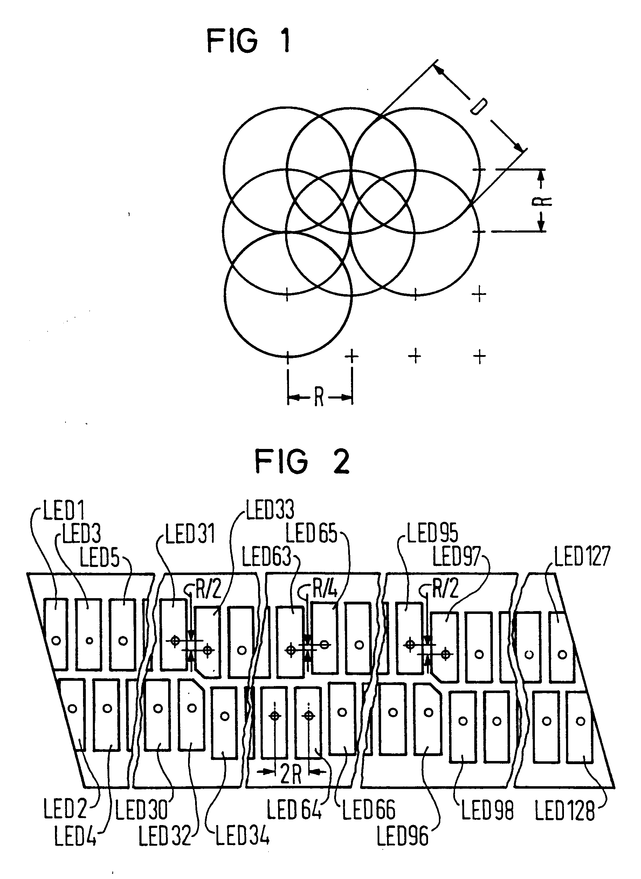

Als bekannt vorausgesetzt wird ein nach dem elektrofotografischen Prinzip arbeitender Drucker mit einem optischen Zeichengenerator, der eine Vielzahl von einzeln erregbaren Leuchtdioden in zeilenweiser Anordnung aufweist. Ein derartiger optischer Zeichengenerator belichtet eine Fotoleitertrommel des Druckers matrixartig, wie in FIG 1 schematisch angedeutet ist. Das Raster der Druckmatrix ist, vorgegeben durch eine Rasterweite R, in Zeilen- und Spaltenrichtung identisch. Der Punktdurchmesser D auf der Fotoleitertrommel möge der doppelten Rasterweite entsprechen, so daß sich das in FIG 1 dargestellte Belichtungsbild ergibt.

Für jeden Rasterpunkt einer Zeile der Druckmatrix steht eine Leuchtdiode LED im optischen Zeichengenerator zur Verfügung. In FIG 2 ist die räumliche Anordnung der einzelnen Elemente eines Leuchtdiodenbausteines gezeigt, der zusammen mit einer Vielzahl von weiteren derartigen Bausteinen die Leuchtdiodenleiste des optischen Zeichengenerators bildet. Aus räumlichen Gründen sind die Leuchtdioden LED1 bis LED128 jeweils in einem Abstand angeordnet, der der doppelten Rasterweite R entspricht. Dies bedingt eine Anordnung der Leuchtdioden in zwei Zeilen, wobei die Leuchtdioden der unteren Zeile gegenüber denen der oberen Zeile in Zeilenrichtung um eine Rasterweite 4R versetzt angeordnet sind. Zum Erzeugen des in FIG 1 schematisch angedeuteten Druckbildes werden während eines Schreibvorganges zunächst die Leuchtdioden LED1, LED3, LED5 ... LED127 der oberen Diodenzeile einzeln erregt, so daß auf die Fotoleitertrommel bei diesem: Vorgang zunächst Leuchtpunkte im Abstand der doppelten Rasterweite übertragen werden. Zu einem späteren Zeitpunkt werden dann die dazwischenliegenden Druckpunkte durch Erregung der Leuchtdioden LED2, LED4 bis LED128 der unteren Leuchtdiodenzeile erzeugt.

Man muß sich zunächst verdeutlichen, daß bei leistungsfähigen nichtmechanischen Schnelldruckern aufgrund der verwendeten Papierformate Schreibbreiten beispielsweise von etwa 432 mm, nicht ungewöhnlich sind. Bereits bei einer Rasterteilung von 240 dpi (= dots per inch) bedeutet dies eine Anzahl von 4080 Mikropunkten pro Zeile, d. h. für die Leuchtdiodenleiste des optischen Zeichengenerators benötigt man dann bereits 32 solcher, in FIG 2 dargestellter Diodenbausteine. Wie eine einfache Überschlagsrechnung ergibt, erhöht sich die Anzahl dieser Bausteine auf mindestens 80, wenn bei gleicher Schreibbreite eine Rasterteilung von 600 dpi angestrebt wird. Auch derartig feine Raster liegen für nichtmechanische Schnelldrucker im Bereich der technischen Konzeption, um ein Druckbild zu erzeugen, das von der Schärfeher mit Erzeugnissen der Offsettechnik konkurrieren kann. Dabei ist noch zu berücksichtigen, daß die Breite der tatsächlichen Belichtungszone die der Schreibbreite aus Toleranzgründen noch übersteigt, so daß hier die angegebenen Werte nach oben aufgerundet werden müssen.

Diese beispielhaft genannte Zahlen verdeutlichen das Ansteuerungsproblem im optischen Zeichengenerator, da jede Leuchtdiode LED der Leuchtdiodenleiste während des Belichtungsvorganges für eine Mikrozeile einzeln angesteuert werden muß. Wie sich leicht überlegen läßt, bedeutet selbst ein mittlerer Treiberstrom von 15 mA pro Leuchtdiode bereits eine erhebliche Strombelastung für die gesamte elektronische Schaltung, so daß Maßnahmen getroffen werden müssen, die Gesamtbelastung im Mittel möglichst klein zu halten.

Zu diesem Zweck wird der Schreibvorgang für eine auf den Fotoleiter zu schreibende Mikrozeile in mehrere Schreibzyklen unterteilt, die untereinander zeitlich gestaffelt werden. In dem gewählten Ausführungsbeispiel werden, wie noch näher zu erläutern sein wird, vier derartige Schreibzyklen zugrundegelegt. In der geometrischen Anordnung der Leuchtdioden LED1 bis LED128 auf dem Diodenbaustein ist dies durch eine Aufteilung der Leuchtdioden in vier Diodenblöcke mit den Leuchtdioden LED1 bis LED32, LED33 bis LED 64, LED65 bis LED96 bzw. LED97 bis LED128 verkörpert. Die Fotoleitertrommel des nichtmechanischen Druckers läuft kontinuierlich um und voraussetzungsgemäß werden die Diodenblöcke zeitlich gestaffelt angesteuert, deshalb sind die Leucht-dioden der jeweiligen Blöcke zueinander geometrisch versetzt angeordnet. Dabei ist der geometrische Versatz Cerart gewählt, daß die sich aus der Strombelastung ergeberde thermische Belastung auch im zeitlichen Mittel örtlich oleichmäßig verteilt. Aus diesem Grund wird, von links nach rechts betrachtet, zunächst der erste Dioden block, dann der dritte, danach der zweite und schließlich der vierte Diodenblock angesteuert.

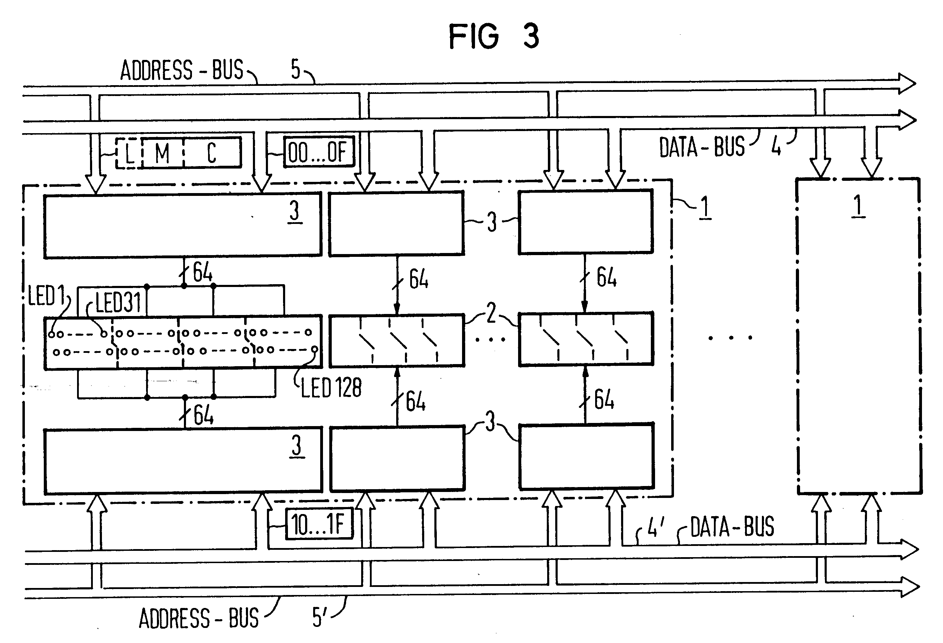

In FIG 3 ist in Form eines Blockschaltbildes der Prinzipaufbau des optischen Zeichengenerators, bestehend aus einer Leuchtdiodenleiste mit einer Vielzahl von Diodenbausteinen sowie der entsprechenden Ansteuerung dargestellt. Der Zeichengenerator ist aus einer Mehrzahl von Zeichengeneratormodulen 1 aufgebaut, die flächenmäßig aneinandergereiht sind. Alle Module sind gleichartig strukturiert, deshalb ist der Prinzipaufbau der Module nur an einem Beispiel dargestellt. Kernstück eines Zeichengeneratormoduls 1 ist eine Zeile von bereits anhand von FIG 2 näher erläuterten Leuchtdiodenbausteinen 2 mit jeweils doppelzeiliger Anordnung von Leuchtdioden LED1 bis LED128. Aus Raumgründen ist jeder Leuchtdiodenzeile ein eigener Ansteuerbaustein 3 zugeordnet, der in diesem Beispiel 64 Ausgangsleitungen besitzt, um individuell die 64 Leuchtdioden LED1, LED3 bis LED127 bzw. LED2, LED4 bis LED 128 in Abhängigkeit von der jeweiligen Druckinformation zu aktivieren.

Diese Druckinformation wird den Ansteuerbausteinen 3 über Datenbusleitungen 4, 4' parallel zugeführt. Die Breite dieser Datenbusleitungen beträgt jeweils 16 Bit, wie in FIG 3 mit den Datenbits 00 bis 0F bzw. 10 bis 1F angedeutet ist. Zur Übernahme der über die Datenbusleitungen 4, 4' übermittelten Druckinformation werden die entsprechenden Ansteuerbausteine 3 mit Hilfe einer über Adreßbusleitungen 5, 5' übertragenen Adresse selektiert. In FIG 3 ist der Aufbau der Adresse schematisch angedeutet. Sie enthält eine Speicherregisteradresse L, eine Moduladresse M und eine Bausteinadresse C. Dabei wird die Speicherregisteradresse L an sich nicht über die Adreßbusleitungen 5, 5' übertragen, sondern innerhalb der Ansteuerbausteine 3 intern gebildet.

Schematisch betrachtet umfaßt sie jedoch zwei Adreßbits, mit denen jeweils eines von vier Zwischenregistern für die parallele Übernahme von 16 auf der entsprechenden Datenbusleitung 4 bzw. 4' angebotenen Datenbits selektiert werden kann. Die insgesamt 64 Datenbits entsprechen der Druckinformation für die obere bzw. untere Hälfte eines Leuchtdiodenbausteines 2. Die Bausteinadresse C umfaßt fünf Adreßbits und erlaubt damit die Auswahl von bis zu 32 Leuchtdiodenbausteinen 2 bzw. den ihnen zugeordneten Ansteuerbausteinen 3 innerhalb eines Zeichengeneratormoduls 1. Über die Moduladresse M schließlich wird der entsprechende Zeichengeneratormodul selektiert. Bei drei Adreßbits kann der Zeichengenerator bis zu acht Zeichengeneratormodule aufweisen.

Die räumliche Anordnung der Ansteuerbausteine 3 zu beiden Seiten der Leuchtdiodenbausteine 2 erfordert es, diese Adressen, insbesondere die Speicherregisteradresse L in der unteren Hälfte des Zeichengenerators invertiert zu bearbeiter. Umgeschaltet wird der Ansteuerbaustein 3 für diesen Schritt über das niederwertigste Bit der Bausteinadresse C über eine feste Verdrahtung auf dem Zeichengeneratormodul. Näheres dazu wird später erläutert.

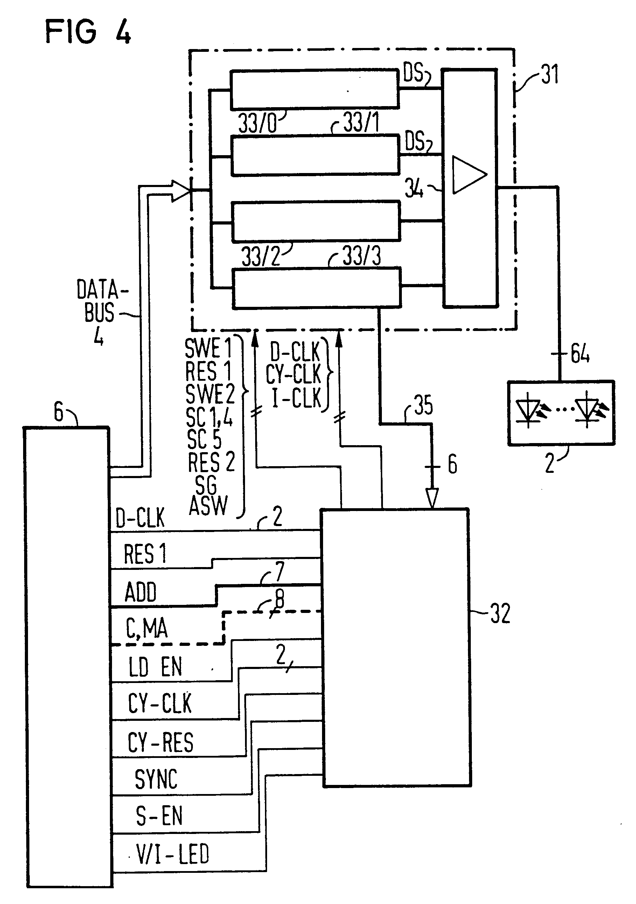

In FIG 4 ist nun ein Blockschaltbild dargestellt, das insbesondere für einen Ansteuerbaustein 3 den Informationsfluß schematisch erläutert. Aus Gründen der Übersichtlichkeit ist der Ansteuerbaustein 3 in FIG 4 in eine Verarbeitungseinheit 31 und ein sequentielles Schaltwerk 32 unterteilt. In einer konventionell aufgebauten Druckersteuerung 6 wird die Druckinformation aufbereitet und der Verarbeitungseinheit 31 über die Datenbusleitung 4 zugeführt. Der prinzipiellen, vorstehend erläuterten Struktur des Zeichengenerators entsprechend ist die Verarbeitungseinheit 31 im wesentlichen aus vier, zueinander parallel geschalteten Teilschaltungen 33/0 ... 33/3 aufgebaut. Jede Teilschaltung enthält alle Elemente, um aus der Druckinformation für 16 Leuchtdioden 16 individuelle Ansteuersignale DS aufzubereiten, die einem Treiberbaustein 34 zugeführt werden. Dieser enthält 64 Treiberschaltungen, die jeweils individuell eine der 64 zugeordneten Leuchtdioden LED1, LED3 bis LED127 bzw. LED2, LED4 bis LEC128 selektiv aktivieren.

Dazu sei hier zunächst grundsätzlich festgestellt, daß die individuelle Ansteuerung jeder einzelnen Leuchtdiode des optischen Zeichengenerators wegen der hohen Anforderungen an eine gleichmäßige Druckqualität einerseits und wegen unterschiedlicher Charakteristiken der Leuchtdioden andererseits notwendig ist. Gefordert wird eine möglichst einheitliche Strahlungsenergie aller Leuchtdioden. Da die Strahlungsleistung der Leuchtdioden unterschiedlich ist, muß jeder Leuchtdiode individuell eine bestimmte Betätigungszeit während eines Schreibzyklus zugeordnet werden. Neben der zeitlichen Entkopplung der sequentiell zugeführten Druckinformation von dem zunächst prinzipiell als parallelen Vorgang zu betrachtenden Belichten einer Mikrozeile der Fotoleitertrommel ist dies die Hauptfunktion der Teilschaltungen 33 der Verarbeitungseinheit 31.

Um diese Funktion in einem vorgegebenen Zeitraster erfüllen zu können, benötigen die Teilschaltungen 33 eine Mehrzahl von Taktsignalen D-CLK, CY-CLK bzw. I-CLK bzw. eine Reihe von weiteren, im wesentlichen als Zeitsteuersignale zu betrachtenden Steuersignalen, die vom Schaltwerk 32 des Ansteuerbausteines 3 abgegeben werden. Die Gesamtheit der Ausgangssignale wird im Schaltwerk 32 im wesentlichen mit einem internen Zähler aus Eingangssignalen abgeleitet, die ihm von der Druckersteuerung 6 zugeführt werden. Dies Sind im wesentlichen zwei Taktsignale, nämlich ein Datentaktsignal D-CLK und ein Zyklustaktsignal CY-CLK sowie weitere Steuersignale, auf die im einzelnen im Zusammenhang mit der detaillierten Beschreibung des Schaltwerkes 32 näher eingegangen wird. Angedeutet sei hier nur, daß das Schaltwerk 32 auch die von der Druckersteuerung über die Adreßbusleitung 5 übertragene Adresse ADD durch einen Vergleich mit einer intern festgelegten Baustein- und Moduladresse C,MA decodiert. Letzteres ist aus Gründen der Übersichtlichkeit in FIG 4 durch die mit dem Buchstaben C bzw. M bezeichneten Eingangsleitungen des Schaltwerkes 32 angedeutet.

Schließlich enthält das Schaltwerk 32 außerdem zum Feinabgleich des Arbeitspunktes der Treiberschaltungen des Treiberbausteines 34 benötigte Steuerinformation. Diese von der Druckersteuerung 6 über die Datenbusleitung 4 in die Verarbeitungseinheit 31 übertragene Steuerinformation wird von dort in das Schaltwerk 32 über eine 6-Bit-Leitung 35 ausgekoppelt.

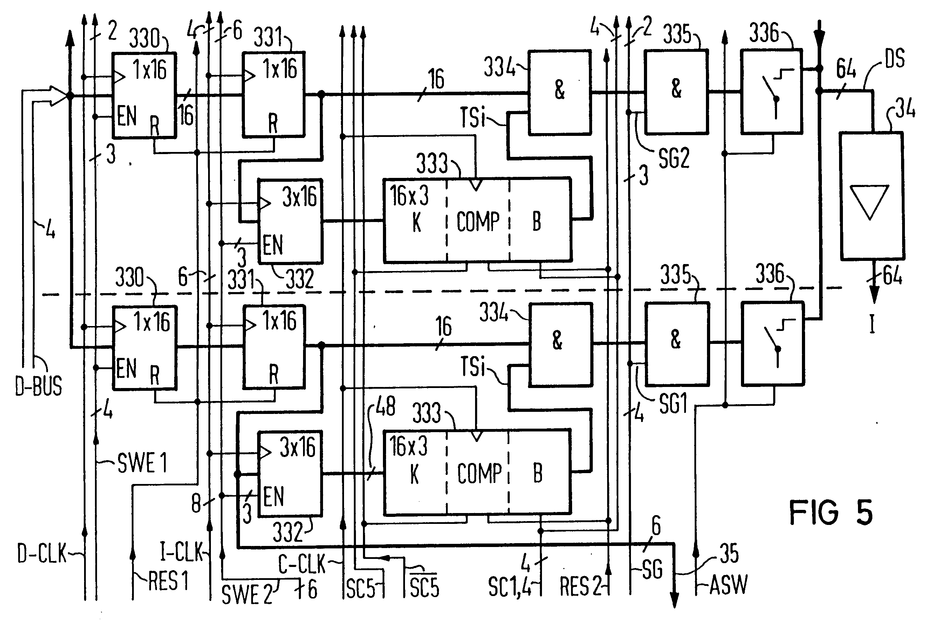

In FIG 5 sind aus Gründen der Übersichtlichkeit nur zwei der vier Teilschaltungen der Verarbeitungseinheit 31 näher dargestellt. Jede Teilschaltung 31 übernimmt in ein Datenregister 330 die auf der Datenbusleitung 4 bzw. 4′ angebotene Druckinformation. Selektiert werden die vier Datenregister 330 einer Verarbeitungseinheit 31 durch vier individuelle Schreibsteuersignale SWE1, die das Schaltwerk 32 aus Adreßsignalen generiert. Die Druckinformation wird in die Datenregister 330 mit einem Übernahmetakt D-CLK übernommen, der ebenso über das Schaltwerk 32 zugeführt wird. An jedes Datenregister 330 ist ein Zwischenregister 331 angeschlossen, mit dem der Datenübertragungszyklus von dem Verarbeitungszyklus des Ansteuerbausteines entkoppelt wird. Die Druckinformation wird aus dem Datenregister 330 in das zugeordnete Zwischenregister 331 mit jeweils einem internen, von dem Schaltwerk 32 erzeugten Taktsignal I-CLK übernommen. Die Datenregister 330 und die Zwischenregister 331 sind gemeinsam über ein Rücksetzsignal RES1 in einen definierten Zustand rücksetzbar, das ebenfalls vom Schaltwerk 32 generiert wird.

Die Druckinformation im Zwischenregister 331 wird bitweise mit einem Zeitwert logisch verknüpft, um die Leuchtdauer der Leuchtdioden individuell zu steuern. Die individuelle Leuchtdauer einer einzelnen Leuchtdiode sei abgestuft in acht Intervalle einstellbar, dabei stelle die minimale Leuchtdauer der Leuchtdioden ein Basisintervall dar, das um sieben Justierstufen erweiterbar sei. Definiert man hier eine Mikrozeilenperiode T als denjenigen Zeitraum, der für das Schreiben einer Mikrozeile insgesamt zur Verfügung steht, so möge eine halbe Mikrozeilenperiode als maximale Anschaltzeit $T_{GATE}$ der einzelnen Treiber des Treiberbausteines 34 zur Verfügung stehen. Die Leuchtdauer einer Leuchtdiode bestimmt sich dann aufgrund der Beziehung 1:

$$(1) \qquad T_{ON} = T_{GATE} \left(\frac{35}{64} + \frac{K}{16}\right)$$

Dabei ist K ein individueller, ganzzahliger Korrekturwert zwischen 0 und 7. In binärer Codierung läßt er sich durch drei Bitstellen ausdrücken. Um in jeder der Teilschaltungen 33 der Verarbeitungseinheit 16 einzelne Korrekturwerte zu speichern, ist jeweils ein Korrekturwertspeicher 332 vorgesehen. Die Ermittlung der Korrekturwerte aufgrund der individuellen Leuchtleistung der Leuchtdiode bildet keinen Teil der vorliegenden Erfindung. Es genügt daher hier die Erläuterung, daß dies unter Einschaltung der Druckersteuerung 6 durch Messung der aktuellen Leistung jeder Leuchtdiode zu festgelegten Testzeitpunkten erfolgt. Die dabei ermittelten Korrekturwerte werden von der Druckersteuerung 6 als Dateninformation über die Datenbusleitung 4, 4' in die zugeordneten Ansteuerbausteine 3 übertragen. Zur Übernahme neuer Korrekturwerte aus den Zwischenregistern 331 wird der Korrekturwertspeicher 332 individuell über weitere vom Schaltwerk 32 erzeugte Schreibsteuersignale SWE2 freigeschaltet. An den Korrekturwertspeicher 332 ist ein Zeitwertkomparator 333 angeschaltet. In der Darstellung von FIG 5 ist angedeutet, daß dieser Komparator 3-Bit-Korrekturwerte K mit einem entsprechenden Zeitbasiswert B vergleicht, um Intervallsignale TS zu erzeugen, die die Leuchtdauer $T_{ON}$ der zugeordneten Leuchtdioden festlegen.

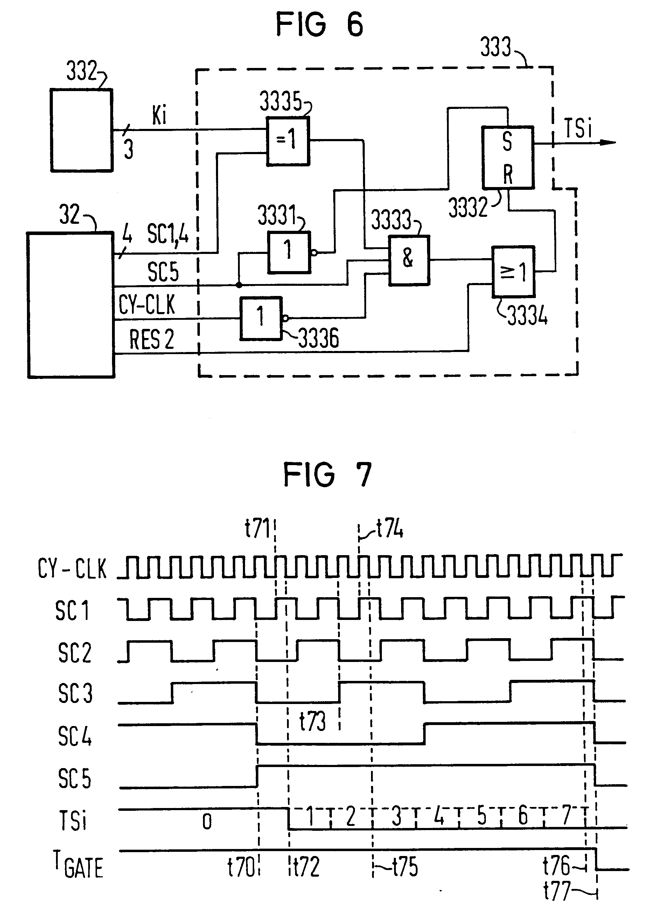

In FIG 6 ist eine Ausführungsform des Zeitwertkomparators in Form einer Teilschaltung zur Verarbeitung eines Korrekturwertes dargestellt. Angedeutet ist der Korrekturwertspeicher 332, aus dem ein individueller Korrekturwert Ki dieser Teilschaltung des Zeitwertkomparators 333 zugeführt wird. Das angedeutete Schaltwerk 32 liefert die notwendigen Zeitsteuersignale. Die Funktion dieser Signale ist in einem Impulsdiagramm von FIG 7 verdeutlicht. Die eigentliche Bezugsgröße für die Funktion des Zeitwertkomparators 333 ist das Zyklustaktsignal CY-CLK, das in dem Schaltwerk 32 durch einen internen synchronen Binärzähler in Zeitsteuersignale SC1 bis SC4 untersetzt wird. Diese ersten Zeitsteuersignale sind in FIG 6 vereinfacht als SC1,4 angedeutet. Aus ihnen ergibt sich der Zeitbasiswert B des Zeitwertkomparators 333. Ein weiteres Zeitsteuersignal SC5 steuert den Ein-bzw. Ausschaltmodus des Zeitwertkomparators 333.

Eingeschaltet werden die Teilschaltungen des Zeitwertkomparators 333 generell zu Beginn eines Schreibzyklus durch das Rücksetzen des zweiten Zeitsteuersignals SC5, das über einen ersten Inverter 3331 invertiert dem Setzeingang einer Kippstufe 3332 zugeführt wird. Diese gibt daraufhin das individuelle Intervallsignal TSi ab, bis sie an ihrem Rücksetzeingang ein Rücksetzsignal empfängt. An den Rücksetzeingang der Kippstufe 3332 werden über ein ODER-Glied 3334 zwei Rücksetzbedingungen zugeführt. Vom Schaltwerk 32 wird ein Rücksetzsignal RES2 generiert, das bei einem Fehler die Kippstufe 3332 in einen definierten Anfangszustand zu Beginn eines Verarbeitungszyklus zurücksetzt.

Im normalen Betriebszustand wird die Rücksetzbedingung für die Kippstufe 3332 von einem UND-Glied 3333 erzeugt. Wie ein Vergleich mit FIG 7 zeigt, wird das UND-Glied 3333 in jedem Fall bis zum Zeitpunkt t70 durch das rückgesetzte zweite Zeitsteuersignal SC5 gesperrt. Erst ab diesem Zeitpunkt ist die Kippstufe 3332 in Abhängigkeit von dem zugeführten individuellen Korrekturwert Ki rücksetzbar. Dazu ist an einen weiteren Eingang des UND-Gliedes 3333 der Ausgang einer Exklusiv-ODER-Schaltung 3335 angeschlossen. Diesem Verknüpfungsglied werden die ersten Zeitsteuersignale SC1 bis SC4 einerseits und der individuelle Korrekturwert Ki andererseits zugeführt. Die Verknüpfungsbedingung soll hier ausdrücklich so verstanden sein, daß die Ausgangsbedingung mit hohem- Signalpegel immer dann erfüllt ist, wenn sich bei der Summe der Eingangssignale aufgrund binärer Verknüpfung logisch "1" ergibt.

Nimmt man beispielsweise einen individuellen Korrekturwert von dezimal "0" an, dann soll nach der oben erläuterten Beziehung (1) die Leuchtdauer $T_{ON}$ der zugeordneten individuellen Leuchtdiode mit dem Basisintervall übereinstimmen. Der individuelle Korrekturwert Ki entspricht dann, binär ausgedrückt, der Bitfolge "000". Zum Zeitpunkt t70 ist damit die Summe der Eingangssignale der Exklusiv-ODER-Schaltung 3335, wie sich auch aus FIG 7 ergibt, "0". Zum Zeitpunkt t71 wechselt das höchstfrequente erste Zeitsteuersignal SC1 seinen Signalzustand. Damit ist die Verknüpfungsbedingung für die Exklusiv-ODER-Schaltung 3335 erfüllt. Dem UND-Glied 3333 wird außerdem über einen weiteren Inverter 3336 das Zyklustaktsignal CY-CLK invertiert zugeführt, deshalb schaltet es mit der abfallenden Flanke des Zyklustaktes zum Zeitpunkt t72 durch. Zum Zeitpunkt t72 ist damit das Basisintervall, wie in FIG 7 durch das Bezugssymbol "0" beim Intervallsignal TSi angedeutet, abgeschlossen.

Wenn dagegen der individuelle Korrekturwert Ki, dezimal ausgedrückt, dem Wert "2" entspricht, dann lautet die entsprechende Bitfolge "010". Diese Bitfolge liegt bezüglich der niederfrequenten ersten Zeitsteuersignale SC4, SC3 und SC2 ab dem Zeitpunkt t73 vor. Zum Zeitpunkt t74 ändert das höchstfrequente erste Zeitsteuersignal SC1 wiederum seinen Signalzustand, so daß mit dem nächsten invertierten Zyklustaktsignal CY-CLK zum Zeitpunkt t75 das UND-Glied 3333 für einen Taktperiode durchgeschaltet ist und die Kippstufe 3332 zurücksetzt. In ähnlicher Form läuft dies für alle anderen Korrekturwerte ab. Selbst mit dem höchsten Korrekturwert Ki = 7 wird das Intervallsignal TSi spätestens zum Zeitpunkt t76 kurz vor Ablauf der maximalen Anschaltzeit für die zugeordnete Treiberschaltung zum Zeitpunkt t77 zurückgesetzt.

Nach dieser Erläuterung des Aufbaus und der Funktion des Zeitwertkomparators 333 anhand von FIG 6 und 7 ist wohl die Funktion der UND-Schaltungen 334 (FIG 5), die einerseits an das zugeordnete Zwischenregister 331 bzw. an den entsprechenden Zeitwertkomparator 333 angeschlossen sind, aus sich heraus verständlich. Die UND-Schaltung 334 enthält 16 UND-Glieder zur Verknüpfung von jeweils einem der individuellen Intervallsignale TSi mit einem der Ausgangssignale des Zwischenregisters 331, so daß die Druckinformation mit der individuellen Leuchtdauer einer Leuchtiode logisch verknüpft wird.

Eine weitere, gleichartig aufgebaute UND-Schaltung 335 ist an die UND-Schaltung 334 angeschlossen, die aus 16 UND-Gliedern mit jeweils zwei Eingängen aufgebaut ist. Die ersten Eingänge sind jeweils mit entsprechenden Ausgängen der UND-Schaltung 334 verbunden. Den zweiten Eingängen ist parallel ein Schaltsignal SG zugeführt, das die maximale Anschaltzeit der Treiberschaltungen des Treiberbausteines 34 im zeitlichen Raster bestimmt. Die Impulsform dieses Schaltsignales für eine der UND-Schaltungen 335 ist bereits in dem Impulsdiagramm $T_{GATE}$ der letzten Zeile von FIG 7 gezeigt.

In jeder Teilschaltung 33 der Verarbeitungseinheit 31 ist schließlich zwischen dem Treiberbaustein 34 und der weiteren UND-Schaltung 335 ein Analogschalter 336 mit jeweils 16 Schaltelementen vorgesehen. Jeder der 16 mit einem der Ausgänge der UND-Schaltung 335 verbundenen Eingänge des Analogschalters 336 bildet einen Steuereingang für eines der Schaltelemente, die ausgangsseitig über parallele Leitungen an den Treiberbaustein 34 angeschlossen sind. Den gesteuerten Eingängen der Schaltelemente wird parallel ein Analogsignal ASW zugeführt, das vom Schaltwerk 32 generiert wird.

Mit dem Pegel dieses Analogsignales kann der Arbeitspunkt aller Treiberschaltungen des Treiberbausteines 34 fein abgeglichen werden, wie noch im einzelnen zu erläutern sein wird. Hier sei zunächst nur festgestellt, daß dieser Feinabgleich aufgrund eines Justierwertes erfolgt, der dem Schaltwerk 32 über eine sechs Bit breite Datenleitung 35 zugeführt wird, die ebenfalls an den Ausgang des Zwischenregisters 331 einer der Teilschaltungen 33 der Verarbeitungseinheit 31 angeschlossen ist. Dieser Justierwert kann damit über den Datenbus 4 bzw. 4' von der Druckersteuerung 6 in einem Ladezyklus zugeführt werden. Dazu sei noch ergänzt, daß alle Teilschaltungen 33 der Verarbeitungseinheit 31 identisch aufgebaut sind, abgesehen davon, daß nur eine der Teilschaltungen diese Datensignalleitungsverbindung 35 zusätzlich aufweist.

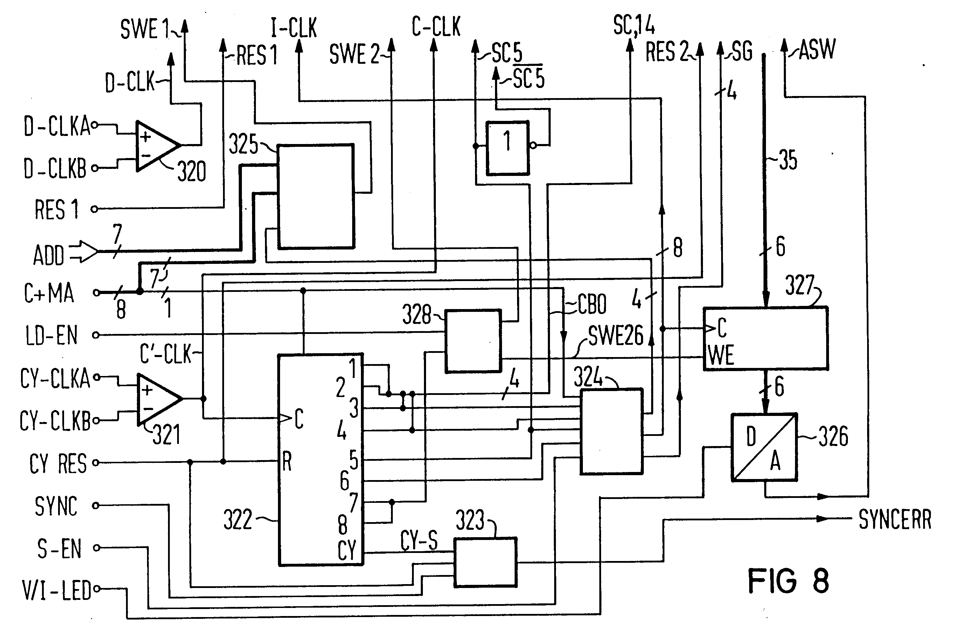

In FIG 8 ist in einem Blockschaltbild der Aufbau des Schaltwerkes 32 des Ansteuerbausteines 3 von FIG 4 detaillierter dargestellt. Dort wurde bereits gezeigt, daß das Schaltwerk 32 als Taktsignale das Datentaktsignal D-CLK sowie das Zyklustaktsignal CY-CLK von der Druckersteuerung 6 zugeführt bekommt. Genau genommen, werden diese Taktsignale als symmetrische Signale D-CLKA und D-CLKB bzw. CY-CLKA und CY-CLKB in dem Schaltwerk 32 von Empfangsverstärkern 320 bzw. 321 empfangen. Diese Verstärkerstufen werten das Differenzsignal der jeweiligen Taktsignale aus und eliminieren durch ihre hohe Gleichtaktunterdrückung und Eingangshysterese mögliche Störungen.

Die Bedeutung des Datentaktsignales D-CLK, d. h.. des Ausgangssignales des einen der Empfangsverstärker 320 als Übernahmetaktsignal für die Datenregister 330 ist bereits erläutert. Im. Zusammenhang mit der Beschreibung des Zeitwertkomparators 333, insbesondere anhand von FIG 6, wurde auch bereits eine Funktion des Zyklustaktsignales CY-CLK als die Zeitbasis zur Gewinnung der Intervallsignale TSi erläutert. Darüber hinaus ist das Zyklustaktsignal das wesentliche Taktsignal für den Schreibzyklus, von dem alle zeitlich gesteuerten Verarbeitungsschritte in dem Ansteuerbaustein 3 abgeleitet werden. So dient es als Taktsignal für einen internen synchronen Binärzähler 322 im Schaltwerk 32. Dieser 8-Bit-Zähler steuert mit seinen Ausgangssignalen die Verarbeitung der über den Datenbus 4 in den Ansteuerbaustein 3 übertragenen Druckinformation. Für eine fehlerfreie Verarbeitung dieser Information müssen alle Binärzähler 322 der einzelnen Ansteuerbausteine 32 synchron arbeiten. Dies ist durch eine Entstörlogik 323 gewährleistet, die die jeweiligen Zähler auf ihren Synchronlauf im Zählzyklus (Zählerstand 0 bis 255) überwacht.

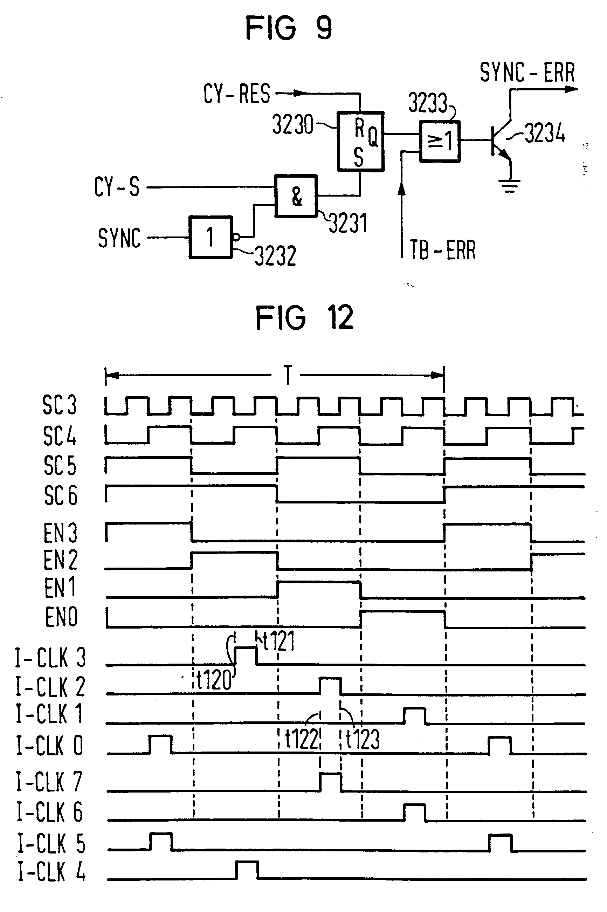

Eine Detailschaltung der Entstörlogik 323 ist in FIG 9 dargestellt. Eine Überwachungskippstufe 3230 wird mit einem Rücksetzsignal CY-RES, das von der Druckersteuerung 6 zugeführt wird, in einen definierten Anfangszustand gesetzt. Um den Synchronlauf aller Binärzähler 322 im optischen Zeichengenerator sicherzustellen, sendet die Druckersteuerung 6 am Ende eines Verarbeitungszyklus ein Synchronisationssignal SYNC aus. In der Entstörlogik 323 wird dieses Signal daraufhin bewertet, ob es zeitgleich mit einem Übertragssignal CY-S auftritt, das die einzelnen Binärzähler 322 an ihrem Übertragsausgang CY abgeben. Dazu ist ein weiteres UND-Glied 3231 vorgesehen, dem das Übertragssignal CY-S und das über einen Inverter 3232 invertierte Synchronisationssignal SYNC zugeführt wird. Wird die Zeitbedingung für das Übertragssignal CY-S und das Synchronsignal SYNC eingehalten, dann bleibt das UND-Glied 3231 gesperrt. Tritt jedoch das Übertragssignal CY-S des Binärzählers 322 zeitlich verschoben auf, so wird dieses UND-Glied 3231 aktiviert. Da es an den Setzeingang der Überwachungskippstufe 3230 angeschlossen ist, wird dann die Überwachungskippstufe 3230 gesetzt. Deren Ausgangssignal steuert über ein ODER-Glied 3233 einen Transistor 3234 mit offenem

EP 0 403 476 B1

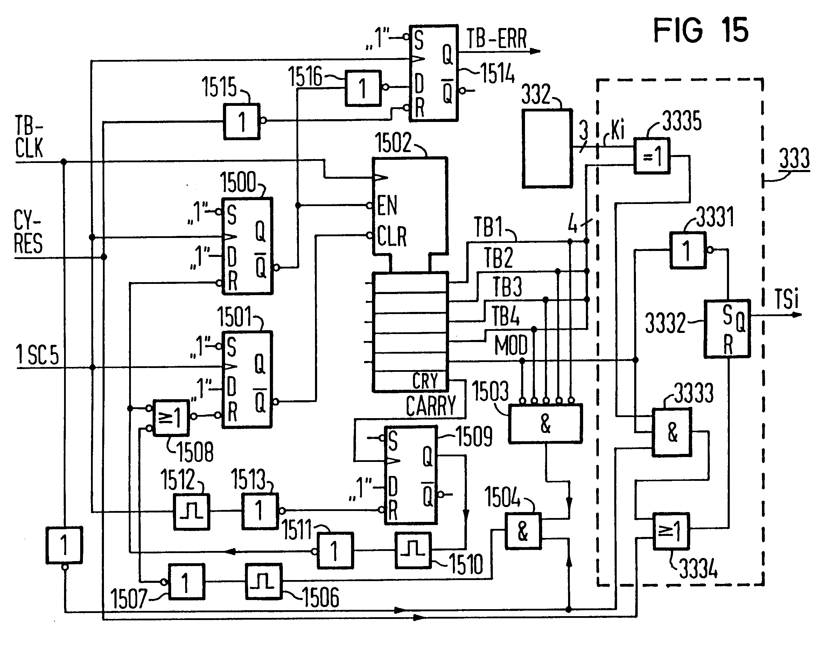

Kollektorausgang leitend, so daß dieser ein Synchronisationsfehlersignal SYNC-ERR abgibt. Das einem weiteren Eingang des ODER-Gliedes zugeführte Fehlersignal TB-ERR wird später in Verbindung mit FIG 15 erläutert.

Nicht mehr dargestellt ist in FIG 9, daß diese Ausgangssignale der Entstörlogiken 323 in einer ODER-Verknüpfung fest verdrahtet zusammengeführt und an die Druckersteuerung 6 zurückgeführt werden. Bei mangelnder Synchronität eines der Binärzähler 322 bricht die Druckersteuerung 6 den Verarbeitungszyklus ab und setzt alle Ansteuerbausteine über das Zyklusrücksetzsignal CY-RES wieder in einen definierten Anfangszustand.

Zurückkehrend zu FIG 8 sollen nun die wesentlichen von dem Binärzähler 322 ausgelösten Steuervorgänge beschrieben werden. Aus Gründen der Übersichtlichkeit und zum besseren Verständnis erscheint es zweckmäßig, zunächst noch ohne Detailabläufe die prinzipielle Schaltfunktion des Schaltwerkes 32 zusammenfassend darzustellen.

In der beschriebenen Ausführungsform besteht die Grundfunktion des Ansteuerbausteines 3 darin, die seriell angebotene Druckinformation in individuelle Treiberströme I für 64 Leuchtdioden LED des zugeordneten Leuchtdiodenbausteines 2 umzusetzen. Erläutert wurde bereits anhand der Beziehung (1), daß die maximale Anschaltzeit $T_{GATE}$ für die Treiberschaltungen im Treiberbaustein 34 eine halbe Mikrozeilenperiode T beträgt.

Demnach steht, bezogen auf einen Leuchtdiodenblock mit insgesamt 16 Leuchtdioden z. B. LED1, LED3, ... LED31 die andere Hälfte eines Verarbeitungszyklus zum seriellen Übernehmen der Druckinformation zur Verfügung. In diesem Ausführungsbeispiel wird für jede Teilschaltung 33 der Verarbeitungseinheit 31 ein Zeitfenster festgelegt, das ein Viertel der Mikrozeilenperiode T beträgt, um die Druckinformation, gesteuert durch die Adresse, zu übernehmen. Eine Mikrozeilenperiode T entspricht 64 Perioden des-Zyklustaktsignales CY-CLK, dieses Zeitfenster ist also 16 Zyklustaktperioden lang. In dieser Zeitspanne können dann alle einander entsprechenden Teilschaltungen 33/0, 33/1, 33/2 bzw. 33/3 eines Zeichengeneratormoduls 1 seriell aufgrund der Bausteinadresse zur Übernahme der Druckinformation selektiert werden. Wenn nun darüber hinaus die Frequenz des Datentaktsignals D-CLK ein n-faches des Zyklustaktsignales CY-CLK beträgt, dann können innerhalb einer Zyklustaktperiode einander entsprechende Teilschaltungen 33 von n verschiedenen Zeichengeneratormodulen 1 unter Verwendung der Moduladresse M ausgewählt werden.

Anhand von FIG 2 wurde bereits die prinzipielle Struktur eines Leuchtdiodenbausteines 2 erläutert. Dem flächenmäßigen Versatz der vier Leuchtdiodenblöcke zu je 16 Leuchtdioden z. B. LED1, LED3, ... LED31 entspricht die Unterteilung der Verarbeitungseinheit 31 in vier, jeweils einem Leuchtdiodenblock zugeordnete Teilschaltungen 33/0, 33/1, 33/2 bzw. 33/3. Die geometrische Anordnung der Leuchtdioden und der Einsatz von mehreren gleichartigen Teilschaltungen 33 ermöglicht bei diesem Ausführungsbeispiel vier zeitlich gestaffelt ablaufende Schreibzyklen zum Erstellen einer Mikrozeile.

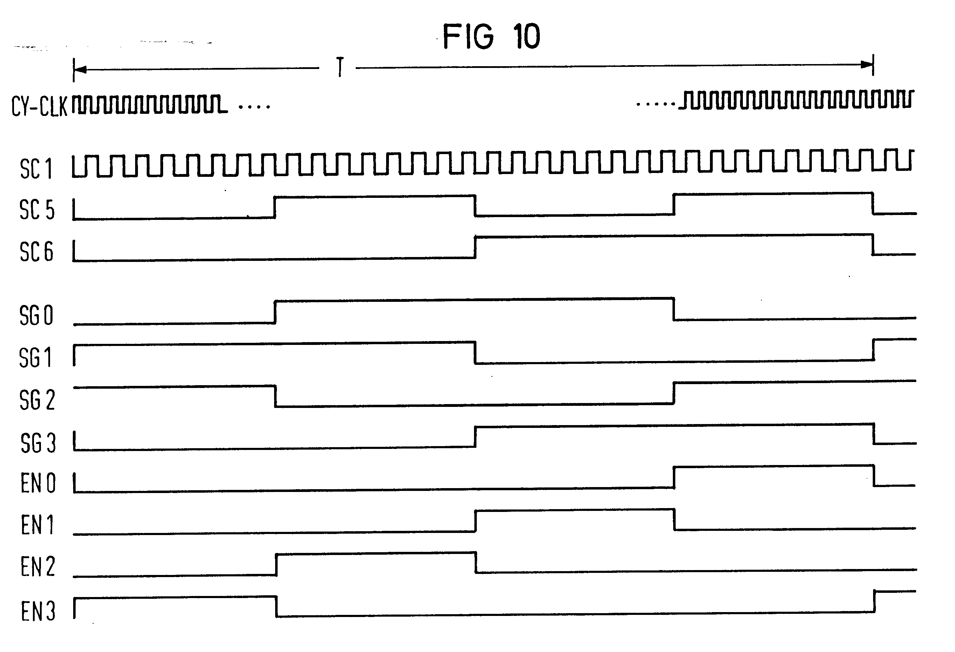

Bezogen auf einen einzelnen Ansteuerbaustein 3 ist diese prinzipielle Funktion eines Schaltwerkes 32 anhand der in FIG 10 dargestellten Impulsdiagramme illustriert. Das Zyklustaktsignal CY-CLK bildet die Zeitbasis für eine Mikrozeilenperiode T. Der beschriebene Binärzähler 322 teilt dieses Taktsignal herunter und bildet dabei die Zeitsteuersignale SC1 bis SC6 von FIG 10. Aus der logischen Kombination der Zeitsteuersignale SC5 und SC6 werden die Schaltsignale SG0 bis SG3 gebildet, die die maximale Anschaltzeit der Treiberstufen im zugeordneten Treiberbaustein 34 festlegen. Wie FIG 10 zeigt, sind diese Schaltsignale jeweils für eine halbe Mikrozeilenperioden T im Zustand "1". Diese Anschaltzeiträume sind zeitlich gestaffelt. Die Summe der Treiberströme I im Leuchtdiodenbaustein 2 ist damit im zeitlichen Mittel etwa konstant, so daß ein vorgegebener Wert nicht überschritten wird.

Sobald eine der Teilschaltungen 33 die vorher empfangene Druckinformation in Ansteuersignale DS für den Treiberbaustein 34 umgesetzt hat, steht sie wiederum für die Übernahme von Druckinformation der nächstfolgenden Mikrozeile zur Verfügung. Der Übernahmezeitraum ist durch eines der vier Zeitfenstersignale EN0 bis EN3 definiert, die sich jeweils für einen Zeitraum: von T/4 unmittelbar an die Anschaltzeit der zugeordneten Schaltsignale SG0 bis SG3 anschließen.

Die erläuterte Schaltfunktion des Schaltwerkes 32 wird, wie in FIG 8 dargestellt ist, mit dem Binärzähler 322 in Verbindung mit einer ersten Decodierschaltung 324 erreicht. Diese Schaltung erhält vom Binärzähler die Zeitsteuersignale SC3, SC4 sowie SC5 und SC6.

Außerdem wird ihr das niederwertigste Bit CB0 der Bausteinadresse C auf einer fest verdrahteten Signalleitung zugeführt. Dieses Eingangssignal hat eine besondere Bedeutung. Anhand von FIG 3 wurden die Leuchtdiodenbausteine 2 mit einer doppelzeiligen Anordnung der einzelnen Leuchtdioden z. B. LED1, LED3 bis LED127 bzw. LED2, LED4 bis LED128 erläutert. Diesen beiden Leuchtdiodenzeilen ist in spiegelbildlicher Anordnung jeweils ein eigener Ansteuerbaustein 3 zugeordnet. Wegen der Spiegelsymmetrie müssen die Ansteuerbausteine 3 der einen Leuchtdiodenzeile Adressen normal, die Ansteuerbausteine 3 der anderen Leuchtdiodenzeile Adressen für die Datenregister 330 bzw. die UND-Schaltungen 335 dagegen invertiert bearbeiten. Diese Umschaltuns erfolgt im. Ansteuerbaustein über das niederwertigste Adreßbit CB0 der Bausteinadresse C.

9

Ein weiteres Eingangssignal der ersten Decodierschaltung 324 ist ein von der Druckersteuerung 6 zugeführtes Anschaltsignal S-EN. Mit dem rückgesetzten Zustand dieses Signales sind parallel alle Treiberschaltungen des optischen Zeichengenerators einschaltbar bzw. umgekehrt mit dem gesetzten Zustand ausschaltbar.

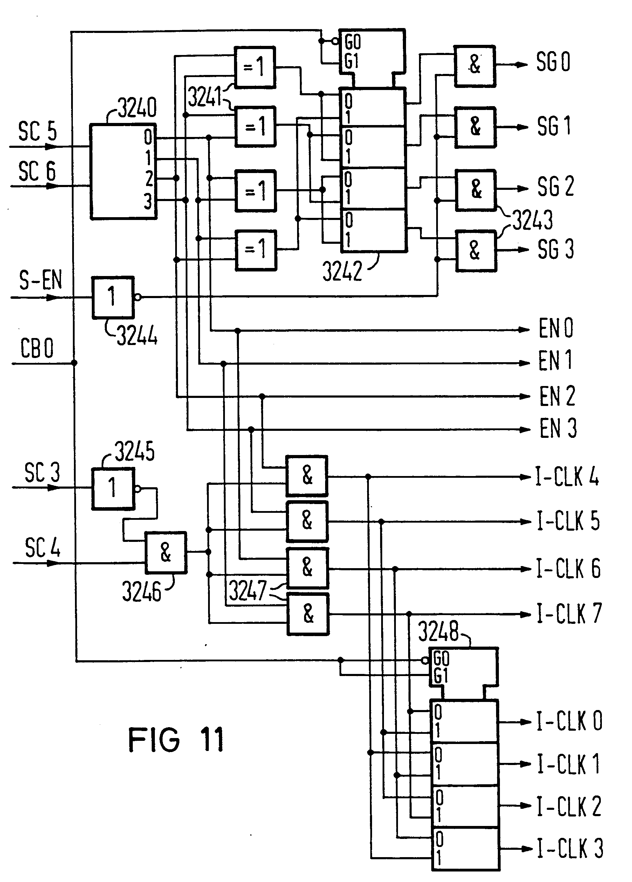

Einzelheiten der ersten Decodierschaltung 324 sind in einem Blockschaltbild von FIG 11 dargestellt. Einem ersten Decoder 3240 werden die Zeitsteuersignale SC5 und SC6 zugeführt, um aus dieser Signalkombination die vier Zeitfenstersignale EN0 bis EN3 abzuleiten, deren Impulsverläufe in FIG 10 gezeigt sind. Diese Zeitfenstersignale werden paarweise kombiniert einer von vier ODER-Schaltungen 3241 zugeführt, an die ein Multiplexerbaustein 3242 angeschlossen ist. Dieser Multiplexerbaustein besteht aus vier 2-zu-1-Multiplexerstufen. Deren erste Eingänge 0 werden selektiert, wenn das niederwertigste Bit CB0 der Bausteinadresse im Signalzustand "0" ist. Die Eingänge 1 des Multiplexerbausteines 3242 werden durchgeschaltet, wenn das Bit CB0 im Zustand "1" ist. An jede der vier Stufen des Multiplexerbausteines 3242 ist eines von vier UND-Gliedern 3243 mit einem Eingang angeschlossen. Die zweiten Eingänge dieser UND-Glieder erhalten das über einen Inverter 3244 invertierte Anschaltsignal S-EN. Die Ausgangssignale dieser UND-Glieder 3243 bilden die Schaltsignale SGO bis SG3 mit den in FIG 10 gezeigten Impulsformen.

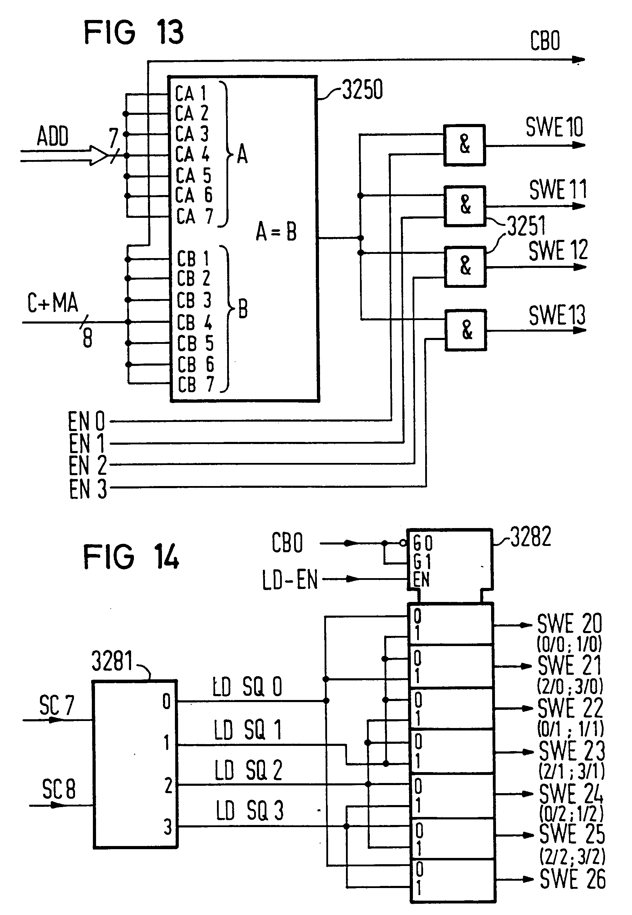

Die erste Decodierschaltung 324 generiert darüber hinaus mit Hilfe der Zeitfenstersignale EN0 bis EN3 weitere Steuersignale, bisher allgemein als interne Taktsignale I-CLK bezeichnet. Im einzelnen handelt es sich um Taktsignale I-CLK0 bis I-CLK3 für die Zwischenregister 331 bzw. um Taktsionale I-CLK4 bis I-CLK7 für die Korrekurwertspeicher 332, deren Zeitverlauf in FIG 12 illustriert ist.

Dort sind nochmals die Zeitsteuersignale SC3 bis SC6 dargestellt. Wie erläutert, werden aus den beiden Zeitsteuersignalen SC5 und SC6 die Zeitfenstersignale EN0 bis EN3 abgeleitet. Damit ist der Zeitrahmen für die Übernahme der Druckinformation in die Datenregister 330 festgelegt. Betrachtet man als Beispiel die vierte Teilschaltung 33/3 der Verarbeitungseinheit 31 des Ansteuerbausteines 3, dann legt das zugeordnete Zeitfenstersignal EN3 die Übernahme der gesamten Druckinformation in das entsprechende Datenregister 330 im ersten Viertel der Mikrozeilenperiode T fest. Im darauf folgenden zweiten Viertel der Mikrozeilenperiode kann dann die Druckinformation in das nachgeschaltete Zwischenregister 331 übernommen werden. Den Übernahmezeitpunkt definiert das Übernahmetaktsignal I-CLK3, das für einen Zeitraum T/16 aktiviert ist. FIG 12 zeigt genauer, daß die Anstiegsflanke des Übernahmetaktsignales ICLK3 während des aktivierten Zustandes des Zeitfenstersignales EN2 zum Zeitpunkt t120 auftritt, wenn das dritte Zeitsteuersignal SC3 zurückgesetzt wird und zugleich das vierte Zeitsteuersignal SC4 den Signalzustand "I" einnimmt. Die Abfallflanke dieses Übernahmetaktsignales zum Zeitpunkt t121 fällt dann mit der nachfolgenden Zustandsänderung des dritten Zeitsteuersignales SC3 zusammen.

Die schaltungstechnische Realisierung ist ebenfalls in FIG 11 dargestellt. Einem weiteren UND-Glied 3246 wird das dritte Zeitsteuersignal SC3 über einen weiteren Inverter 3245 invertiert und das Zeitsteuersignal SC4 unmittelbar zugeführt. Das UND-Glied 3246 ist parallel mit ersten Eingängen von vier weiteren UND-Gliedern 3247 verbunden, an deren zweite Eingänge jeweils eines der Zeitfenstersignale EN0, EN1, EN2 bzw. EN3 gelegt ist. Diese UND-Glieder geben jeweils eines der internen Taktsignale I-CLK4 bis I-CLK7 ab. Schließlich ist ein zweiter Multiplexerbaustein 3248 vorgesehen, der wieder erste Multiplexerbaustein 3242 aufgebaut ist und ebenfalls durch das niederwertigste Bit CB0 der Bausteinadresse C umgeschaltet wird. Die Verdrahtung der Ausgänge der UND-Glieder 3247 mit den Eingängen der einzelnen Multiplexerstufen des Multiplexerbausteines 3248 ergibt sich zwangsläufig aus vorstehenden Erläuterungen für die Zeitbedingungen der Übernahmetaktsignale I-CLK0 bis I-CLK3 für die Zwischenregister 331. Wie FIG 12 zeigt, sind einander korrespondierende, d. h. denselben Teilschaltungen 33 zugeordnete Übernahmetaktsignale z. B. I-CLK3 und I-CLK7 für die Zwischenregister 331 bzw. die Korrekturwertspeicher 332 zueinander um jeweils T/4 zeitlich versetzt. Wenn das Übernahmetaktsignal I-CLK3 zwischen t120 und t121 aktiviert ist, dann tritt das Übernahmetaktsignal I-CLK7 zwischen den Zeitpunkten t122 und t123 auf.

Die geschilderte erste Decodierschaltung 324 liefert also unter Verwendung der von dem Binärzähler 322 gelieferten Zeitbasis die wesentlichen Schaltsignale für die Entkopplung der Datenübernahme von der Verarbeitung der übernommenen Daten und der Gewinnung der eigentlichen Ansteuersignale DS für die Leuchtdiodentreiber des Treiberbausteines 34.

Damit die Übernahme der Druckinformation in die Datenregister 330 der einzelnen Teilschaltungen 33 nur während des festgelegten Zeitfensters erfolgt, ist nach FIG 8 im Schaltwerk 32 ein Adreßkomparator 325 vorgesehen. Er empfängt die Zeitfenstersignale EN0 bis EN3 als Steuersignale und außerdem die über die Adreßbusleitungen 5, 5′ übertragenen Adreßsignale ADD. Die Moduladresse M und die Bausteinadresse C sind durch eine feste Verdrahtung gegenüber Massepotential definiert. Auf nicht verdrahteten Anschlüssen stellt sich automatisch der Signalzustand "1" ein. Dies ist in FIG 8 schematisch durch die dem Adreßkomparator 325 zugeordneten und mit C+MA bezeichneten Signalleitungen angedeutet.

Ein Detailschaltbild des Adreßkomparators 325 ist in FIG 13 dargestellt. Einem Komparatorbaustein 3250 wird auf sieben ersten Signaleingängen die von der Druckersteuerung 6 übertragene Adresse ADD zugeführt. Sieben zweite Eingänge sind, wie oben angegeben, zur Bildung der Bausteinadresse fest verdrahtet, wobei das niederwertigste Adreßbit CB0 herausgeführt ist. Der Komparatorbaustein 3250 vergleicht diese beiden zugeführten Adressen und gibt bei Identität ein positives Ausgangssignal ab. Dieses wird parallel ersten Eingängen von vier weiteren UND-Gliedern 3251 zugeführt, deren zweite Eingänge jeweils eines der Zeitfenstersignale EN0 bis EN3 empfangen. Die UND-Glieder erzeugen jeweils eines der ersten Schreibsteuersignale SWE10, SWE11, SWE12 bzw. SWE13. Jedes dieser Signale schaltet eines der Datenregister 320 zur Datenübernahme frei.

Die durch Fertigungstoleranzen bedingte Streuung der Mittelwerte der Gesamtströme in den verschiedenen Treiberbausteiner 34 soll - wie erwähnt - durch einen Feinabgleich des analogen Steuersignales ASW der Treiberstufen eliminiert werden. Zu diesem Zweck enthält das in FIG 8 dargestellte Schaltwerk 32 einen programmierbaren Digital-Analog-Wandler 326, dem die von der Druckersteuerung 6 übertragene Steuerspannung V/I LED zugeführt wird. Dem Digital-Analog-Wandler 326 ist ein 6-Bit-Register 327 zum Speichern des digitalen Wertes für den Feinabgleich zugeordnet. Für die Übernahme dieses bausteinindividuellen Abgleichwertes ist dieses Register über die Datensignalleitung 35 mit den Ausgängen des Zwischenregisters 331 der vierten Teilschaltung 33 der Verarbeitungseinheit 31 verbunden. Mit dem gespeicherten Abgleichwert wird die zugeführte Steuerspannung V/I-LED im Digital-Analog-Wandler 326 korrigiert und als Analogsignal ASW den Analogschaltern 336 der Verarbeitungseinheit 31 zugeführt.

Vorstehend wurde im wesentlichen auf die Funktion des Schaltwerkes 32 und der Verarbeitungseinheit 31 bei Schreibzyklen eingegangen, bei denen Druckin,formation in Ansteuersignale DS für die Treiberbausteine 34 umgesetzt wird. Dabei wird sowohl bausteinbezogene als auch für jede angesteuerte Leuchtdiode individuelle Korrekturinformation verarbeitet. Diese in dem Register 327 für den Feinabgleichswert bzw. in den Korrekturwertspeichern 332 niedergelegte Information ist aber in dem Ansteuerbaustein 3 nicht fest gespeichert, sondern kann von der Druckersteuerung 6 aufgrund von globalen bzw. individuellen Messungen während Testroutinen immer wieder neu ermittelt werden, um Alterungsvorgänge zu berücksichtigen.

Neben den beschriebenen normalen Schreibzyklen sind daher auch Ladezyklen zum Abspeichern geänderter Korrekturwerte in den Korrekturwertspeichern 332 bzw. aktualisierter bausteinbezogener Justierwerte in dem Register 327 vorzusehen. Im Grunde laufen diese Ladevorgänge bezüglich ihrer zeitlichen Verschachtelung ähnlich ab wie bei den vorstehend detailliert beschriebenen Verarbeitungszyklen. Dies gilt jedoch nur mit ,einer Einschränkung: Die Druckinformation umfaßt, bezogen auf die individuelle Leuchtdiode LED, lediglich ein Bit, der für jede angesteuerte Leuchtdiode individuelle Korrekturwert K dagegen besteht aus drei Bit. Daneben muß in einem Ladezyklus außerdem noch die aktualisierte Information zum Laden des Registers 327 für den Feinabgleichswert übertragen werden.

Auch im Ladezyklus werden die beschriebenen Adressierungsschemata für die Datenübertragung der aktualisierten Korrekturwerte bzw. Justierwerte verwendet. Auch die zeitliche Staffelung der Ladevorgänge ist bei Schreib- und Ladezyklen in gleicher Weise organisiert. Damit ist unmittelbar verständlich, daß sich ein Ladezyklus aus vier aufeinanderfolgenden Ladesequenzen zusammensetzt, um nacheinander die drei Bitstellen der für jede der angesteuerten Leuchtdioden individuellen Korrekturwerte und schließlich die bausteinbezogenen Justierwerte zu übertragen und in die jeweiligen Register zu laden.

Die zeitliche Länge einer Ladesequenz ist identisch mit der Mikrozeilenperiode T, d. h. der Länge eines Schreibzyklus definiert. Während jeder Ladesequenz werden die auch bei einem Schreibzyklus auftretenden Übernahmevorgänge der über die Datenbusleitungen 4, 4′ angebotenen Information in die Datenregister 330 und anschließend in die Zwischenregister 331 ebenso unter Verarbeitung der über die Adreßbusleitungen 5, 5′ übertragenen Adressen und der von den Schaltwerken 32 der Ansteuerbausteine 3 gelieferten Steuersignale durchgeführt. Insoweit besteht an sich im Vergleich zu einem Schreibzyklus kein Unterschied. Eine nochmalige Betrachtung der jeweiligen Einzelvorgänge erübrigt sich daher.

Im folgenden soll deshalb lediglich auf Unterschiede zu den Abläufen bei einem Schreibzyklus eingegangen werden. Ladezyklen werden von der Druckersteuerung 6 durch ein dem Schaltwerk 32 übertragenes Ladesteuersignal LD-EN initiiert, wie in FIG 4 bzw. FIG 8 dargestellt ist. In FIG 8 ist dieses Ladesteuersignal LD-EN einer zweiten Decodierschaltung 328 zugeführt, die die Vorgänge bei einem Ladezyklus steuert. Diese Decodierschaltung ist mit höherwertigen Ausgängen des Binärzählers 322 verbunden und empfängt damit dritte Zeitsteuersignale SC7 bzw. SC8. Ausgangssignale der zweiten Decodierschaltung 328 sind die zweiten Schreibsteuersignale SWE2, die die Korrekturwertspeicher 332 zum bitweisen Einschreiben von Korrekturwerten K bzw. das Register 327 für den Feinabgleichwert zum Einschreiben eines neuen Justierwertes über die Datensignalleitungen 35 freigeben.

Die Steuerfunktion der zweiten Decodierschaltung 326 wird im folgenden anhand des Detailschaltbildes von FIG 14 näher erläutert. Die beiden, vom Binärzähler 322 abgegebenen dritten Zeitsteuersignale SC7, SC8 werden in einem zweiten Decoder 3281 in vier Fenstersignale LD SQ0 bis LD SQ3 für die aufeinanderfolgenden

11

Ladesequenzen eines Ladezyklus umgesetzt, die jeweils eine Mikrozeilenperiode T lang sind.

Innerhalb einer Ladesequenz können daher zeitlich gestaffelt all die Vorgänge ablaufen, die von der ersten Decodierschaltung 324, wie anhand von FIG 11 und 12 erläutert, zeitlich gesteuert werden.

Diese Fenstersignale der Ladesequenzen müssen nun in die zweiten Schreibsteuersignäle SWE2 umgesetzt werden, mit denen jeweils eines der drei Register der Korrekturwertspeicher 332 für die Datenübernahme vorbereitet wird. Dazu ist ein weiterer Multiplexerbaustein 3282 mit sieben 2-zu-1-Multiplexerstufen vorgesehen. Dieser wird über das Ladesteuersignal LD-EN aktiviert und empfängt als Schaltsteuersignal das niederwertigste Bit DB0 der Bausteinadresse, dessen Funktion bereits erläutert wurde. Sechs Stufen dieses Multiplexerbausteines geben jeweils eines der zweiten Schreibsteuersignale SWE20 im einzelnen SWE20 bis SWE25 ab.

Schematisch ist in FIG 14 die funktionelle Zuordnung jedes einzelnen dieser zweiten Schreibsteuersignale zu den einzelnen Registerstufen der Korrekturwertspeicher 332 angedeutet. Nach FIG 4 enthält jede Verarbeitungseinheit 31 vier Teilschaltungen 33/0 bis 33/3, in FIG 5 ist detaillierter gezeigt, daßt jede Teilschaltung einen Korrekturwertspeicher 332 mit jeweils drei 16-Bit-Registern aufweist. Darauf bezieht sich die jeweilige Funktionsangabe für die zweiten Schreibsteuersignale SWE20 bis SWE25 in FIG 14. Beispielsweise ist das Schreibsteuersignal SWE20 das Vorbereitungssignal für jeweils das erste Register der Korrekturwertspeicher 332 der Teilschaltungen 33/0 bzw. 33/1. Analog ist das Schreibsteuersignal SWE21 das Vorbereitungssignal für die entsprechenden Register der Korrekturwertspeicher 332 der Teilschaltungen 33/2 bzw. 33/3. Betrachtet man den Fall, daß das niederwertigste Bit CB0 der Bausteinadresse C "0" ist, so ergibt sich aus der Verdrahtung der Eingangsseite des weiteren Multiplexerbausteines 3282, daß das Schreibsteuersignal SWE20 zeitlich mit dem Fenstersigal LD SQ0 der ersten Ladesequenz übereinstimmt, während das weiterhin genannte zweite Schreibsteuersignal SWE21 zeitlich der nächstfolgenden Ladesequenz gekennzeichnet durch das Fenstersignal LD SQ1 zuzuordnen ist.

Funktionell bedeutet dies, daß im angenommenen Fall (CBD = "0") während der ersten beiden Ladesequenzen die Korrekturwertspeicher 332 der vier Teilschaltungen 33/0 bis 33/3 vorbereitet werden, um in die jeweils ersten Register das erste Bit geänderter Korrekturwerte K aufzunehmen. Die Datenübernahme selbst wird, zeitlich gestaffelt, durch die erste Decodierschaltung mit Hilfe der einzelnen Übernahmetaktsignale I-CLK4 bis I-CLK7 gesteuert, wie bereits anhand der FIG 11 und 12 näher erläutert wurde.

In Analogie dazu ist aus FIG 14 ableitbar, daß die weiteren zweiten Schreibsteuersignale SWE22 und SWE23 die zweiten Register der Korrekturwertspeicher 332 zur Datenübernahme vorbereiten. Das Schreibsteuersignal SWE22 stimmt dabei zeitlich mit dem zweiten Fenstersignal LD SQ1 der zweiten Ladesequenz überein, während das Schreibsteuersignal SWE23 aus Fenstersignal LD SQ2 der dritten Ladesequenz abgeleitet ist.

In ähnlicher Form bereiten die weiteren zweiten Schreibsteuersionale SWE24 bzw. SWE25 die dritten Register der Korrekturwertspeicher 332 zur Datenübernahme vor. Sie liegen zeitlich übereinstimmend mit den Fenstersignalen LD SQ2 und LD SQ3 der dritten bzw. vierten Ladesequenz. Aus dem Fenstersignal LD SQ3 der vierten Ladesequenz schließlich wird auch noch das dritte Schreibsteuersignal SWE3 abgeleitet, das das Register 327 für den Feinabgleichswert zur Datenübernahme vorbereitet. Die eigentliche Datenübernahme in die einzelnen Register wird jeweils durch separate Übernahmetaktsignale, insbesondere I-CLK4 bis I-CLK7 gesteuert. Deren Generierung wurde bereits im Zusammenhang mit der Beschreibung der ersten Decodierschaltung 324 anhand der FIG 11 bzw. 12 im einzelnen erläutert, so daß sich hier eine Wiederholung erübrigt.

Das vorstehend beschriebene Ausführungsbeispiel illustriert eine mögliche Ausführungsform für die Erfindung, im Rahmen dieser Erfindung sind aber eine Vielzahl von weiteren Ausgestaltungen denkbar. Eine solche Möglichkeit soll hier noch im einzelnen nachfolgend diskutiert werden. Bei dem oben beschriebenen Ausführungsbeispiel sind alle internen Verarbeitungsvorgänge in den Ansteuerbausteinen 3 während eines Verarbeitungszyklus durch das von der Druckersteuerung 6 generierte Zyklustaktsignal CY-CLK gesteuert. Wenn man nun die die Ansteuerung der Leuchtdioden LED unmittelbar betreffenden Vorgänge von den übrigen Verarbeitungsvorgängen in den Ansteuerbausteinen 3 zeitlich trennt, dann erhält man einen weiteren freiheitsgrad für die Ausgestaltung der Ansteuerung der Leuchtdioden LED.

In Weiterbildung des geschilderten Ausführungsbeispieles, dessen Betriebsweise als ein Synchronbetrieb bezeichnet werden könnte, kann man beispielsweise die Druckersteuerung 6 derart ausgestalten, daß sie zusätzlich zu den Zyklustaktsignalen CY-CLK weitere, eine dazu asynchrone Taktsignalfolge TB-CLK liefert, die als Zeitbasistaktsignalfolge bezeichnet unter Beibehaltung der geschilderten Prinzipien die Funktion des Zeitwertkomparators 333 steuert. Die erläuterte Beziehung (1) für die Leuchtdauer $T_{ON}$ einer Leuchtdiode nimmt dann die Form nach Beziehung (2) an:

$$(2) \qquad T_{ON} = \frac{32}{f_{TB-CLK}} \cdot \left(\frac{35}{64} + \frac{K}{16}\right)$$

wobei $f_{TB-CLK}$ die Frequenz dieser Zeitbasistaktsionalfolge ist und für diese als weitere Nebenbedingung gilt, daß die maximale Anschaltzeit $T_{GATE}$ der einzelnen Treiber des Treiberbausteines 34 die Bedingung

$$T_{GATE} \geqq \frac{32}{f_{TB-CLK}}$$

erfüllen soll. Mit diesem zusätzlichen Taktsignal läßt sich losgelöst von den Zeitbedingungen für die Verarbeitung der Druckinformation für eine Mikroieile die individuelle Anschaltzeit der Leuchtdioden LED festlegen, was als asynchroner Betrieb bezeichnet wird. Über die Wahl der Frequenz dieser Zeitbasistaktsignalfolge TB-CLK sind bei kürzeren maximalen Anschaltzeiten $T_{ON}$ der Treiberstufen für die Leuchtdioden LED Arbeitspunkte im linearen Bereich ihrer Strom/Lichtleistungs-Charakteristik einstellbar. Damit ist die Funktion des optischen Zeichengenerators von der Charakteristik eingesetzter Leuchtdioden wesentlich unabhängiger.

Ein Ausführungsbeispiel für eine Schaltungsanordnung zur Ableitung der Intervallsignale TSi aus der zusätzlichen Zeitbasis-Taktsignalfolge TB-CLK ist in FIG 15 dargestellt. Hier ist angenommen, daß diese Taktsignalfolge, wie auch das Zyklusrücksetzsignal CY-RES von der Druckersteuerung 6 geliefert wird. Als weiteres Ansteuersignal wird das vom Schaltwerk 32 erzeugte zweite Zeitsteuersignal SC5 verwendet, dessen Funktion im Zusammenhang mit der Beschreibung der Impulsdiagramme von FIG 7 näher erläutert wurde. Imwesentlichen legt dieses Zeitsteuersignal SC5 im Laufe eines Verarbeitungszyklus den Zeitpunkt fest, zu dem die Ansteuerintervalle der Leuchtdioden LED gruppenweise beginnen sollen.

Um diese Funktion zu realisieren, sind zwei Zustandsflipflops 1500 bzw. 1501 vorgesehen. Das zweite Zeitsteuersignal SC5 wird den Takteingängen beider Flipflops zugeführt. Deren Ausgänge sind mit einem Enableeingang EN bzw. einem Cleareingang eines fünfstufigen Synchronzählers 1502 verbunden, der mit der Zeitbäsis-Taktsignalfolge TB-CLK taktgesteuert ist.

Diese Taktimpulsfolge liegt asynchron zu dem zeitlichen Verlauf des zweiten Zeitsteuersignales SC5. Daher werden mit der positiven Flanke des zweiten Zeitsteuersignals SC. zunächst beide Zustandsflipflops 1500 bzw. 1501 gesetzt.

Damit ist der Synchronzähler 1502 über das Ausgangssignal des ersten Zustandsflipflops 1500 aktiviert. Er wird dann in allen Zählstufen mit dem nächsten Taktimpuls aufgrund des Ausgangssignales des zweiten Zustandsflipflops 1501 zurückgesetzt. Ausgangssignale TB1 bis TB4, MOD der fünf Zählstufen des Synchronzählers haben somit den Niedrigpegel, der über ein UND-Glied mit invertierten Eingängen, das damit als Nulldecoder 1503 arbeitet, detektiert wird. Dessen Ausgangssignal wird einem weiteren UND-Glied 1504 zugeführt, dem außerdem über einen weiteren Inverter 1505 die Zeitbasis-Taktsignale zugeführt sind. An den Ausgang dieses weiteren UND-Gliedes 1504, das mit der negativen Flanke des Taktimpulses durchschaltet, ist ein Bitgenerator 1506 angeschlossen. Er leitet aus diesem statischen Ausgangssignal einen Bitimpuls ab, der mit einem weiteren Inverter 1507 invertiert und über ein weiteres ODER-Glied 1508 dem Rücksetzeingang des zweiten Zustandsflipflops 1501 zugeführt wird. Dieses Flipflop 1501 ist damit wieder zurückgesetzt und die Clear-Funktion erfüllt.

Mit den nachfolgenden positiven Flanken der weiteren Taktsignalfolge TB-CLK wird der Synchronzähler 1502 hochgezählt, bis mit der Rückflanke des 31. Zählimpulses an einem Übertragsausgang CRY ein Übertragssignal CARRY abgegeben wird. Dieses setzt ein weiteres Flipflop 1509, an dessen Ausgang ein weiterer Bitgenerator 1510 sowie ein weiterer Inverter 1511 angeschlossen sind. Abgeleitet aus dem Übertragssignal CARRY des Synchronzählers 1502 gibt damit dieser Inverter 1511 ein Ausgangssignal ab, das als Rücksetzsignal über das ODER-Glied 1508 dem zweiten Zustandsflipflop 1501 sowie dem Rücksetzeingang des ersten Zustandsflipflops 1500 unmittelbar zugeführt ist. Mit dem Rücksetzen des ersten Zustandsflipflops 1500 wird der Synchronzähler 1502 deaktiviert. Hinzuzufügen bleibt, daß das zweite Zeitsteuersignal SC5 zusätzlich einem weiteren Bitoenerator 1512 mit angeschlossenem Inverter 1513 zugeführt wird, der seinerseits mit dem Rücksetzeingang des weiteren Flipflops 1509 verbunden ist. Damit wird dieses Flipflop mit jedem Übertragssignal CARRY erneut gesetzt.

Zur Fehlerüberwachung weist diese Ansteuerschaltung für den asynchronen Betrieb eine weitere Überwachungskippstufe 1514 auf. Diese überwacht die ordnungsgemäße Funktion des Synchronzählers 1502. Sie wird mit dem Zyklusrücksetzsignal CY-RES vor jedem Verarbeitungszyklus in einen definierten Anfangszustand zurückgesetzt. Das dem Synchronzähler 1502 zugeführte Enablesignal wird über einen weiteren Inverter 1516 dem D-Eingang der Überwachungskippstufe angeboten. Damit liegt an diesem Eingang ein Signal hohen Pegels solange der Synchronzähler 1502 aktiviert ist. Wird das erste Zustandsflipflop 1500, ausgelöst durch das Übertragssignal CARRY des Synchronzählers 1502, zurückgesetzt, ändert sich auch am D-Eingang der Überwachungskippstufe der Signalzustand. Tritt nun eine positive Flanke des zweiten Zeitsteuersignales SC5 vor diesem Zustandswechsel am D-Eingang der Überwachungskippstufe 1514 auf, so wird am Ausgang der Überwachungskippstufe ein Fehlersignal TB-ERR erzeugt, das anzeigt, daß der Synchronzähler 1502 fehlerhaft arbeitet. Dieses Fehlersignal wird über das ODER-Glied 3233 in die in FIG 9 dargestellte und bereits beschriebene Entstörlogik mit der dort erläuterten Folge eingespeist.

Zum besseren Verständnis ist schließlich in FIG 15 noch der bereits anhand von FIG 6 erläuterte Zeitwertkomparator 333 und einer der Korrekturwertspeicher 332 dargestellt. Hieraus wird deutlich, daß mit den vier niederwertigen Ausgangssignalen TB1 bis TB4 des Synchronzählers 1502 nun asynchron zu dem Zeitraster des Verarbeitungszyklus Zeitsteuersignale für den Zeitwertkomparator 333 bereitgestellt sind, die in ihrer Funktion mit den in Zusammenhang mit der Beschreibung von FIG 6 näher erläuterten ersten Zeitsteuersignalen SC1 bis SC4 vergleichbar sind. Das Ausgangssignal MOD der fünften Zählstufe des Synchronzählers 1502 ist über den Inverter 3331 bzw. das UND-Glied 3333 dem Setz- bzw.

Rücksetzeingang der Kippstufe 3332 zugeführt, die wiederum funktionell vergleichbare Intervallsignale TSi abgibt. Einzelheiten dazu sind der Beschreibung zu FIG 6 zu entnehmen, so daß sich hier eine Wiederholung erübrigt.

Weiterhin weist - wie beschrieben - jede der vier Teilschaltungen 33/0 bis 33/3 der Verarbeitungseinheit 31 einen Zeitwertkomparator 333 auf. Wegen der zeitlichen Staffelung des Ein- bzw. Ausschaltmodus dieser vier Zeitwertkomparatoren 333 ist die beschriebene Ansteuerschaltung für asynchronen Betrieb doppelt vorzusehen. Die Ansteuerschaltung, wie vorstehend beschrieben, ist den Zeitwertkomparatoren der Teilschaltungen 33/1 und 33/3 zuzuordnen. Eine gleichartig aufgebaute Ansteuerschaltung wird mit dem invertierten zweiten Zeitsteuersignal SC5 angesteuert und ist den Zeitwertkomparatoren 333 der Teilschaltungen 33/0 und 33/2 zugeordnet.

Es kann sich als zweckmäßig erweisen, den Ansteuerbaustein 3,so auszugestalten, daß die Anschaltung der Treiberbausteine 34 alternativ synchron oder asynchron zum Verarbeitungszyklus möglich ist. In diesem Fall wären weitere Multiplexerbausteine vorzusehen, die den Zeitwertkomparatoren selektiv die ersten Zeitsteuersignale SC1 bis SC4 sowie das zweite Zeitsteuersignal SC5 bzw. die Ausgangssignale TB1 bis TB4, MOD eines der Synchronzähler 1502 zuführen. Man hat es damit in der Hand, den beschriebenen optischen Zeichengenerator für eine Serie gleichartiger elektrofotografischer Drucker mit unterschiedlicher Druckleistung zu verwenden. Bei Geräten niedriger Druckleistung wird man den Ansynchronbetrieb vorziehen, um den Arbeitspunkt der Leuchtdioden höher zu legen. Bei Hochgeschwindigkeitsdruckern liegt der Arbeitspunkt der Leuchtdioden an sich bereits hoch, so daß hier der Synchronbetrieb vorzuziehen ist.

## Patentansprüche

1. Optischer Zeichengenerator eines elektrofotografischen Druckers zum Erzeugen eines Ladungsbildes auf einer umlaufenden Ladungsspeichertrommel in Form von fortlaufend in jeweils einem Druckzyklus erzeugten Mikrobildzeilen mit einer Mehrzahl von zeilenförmig angeordneten Modulen (1), bestehend aus einer Mehrzahl von Leuchtdiodenbausteinen (2) mit jeweils zeilenweise untereinander angeordneten und zugleich zueinander versetzten Leuchtdioden (LED), aus diesen zu beiden Seiten zugeordneten Treiberbausteinen (34) und aus mit letzteren verbundenen Ansteuerbausteinen (3) zum Zwischenspeichern und Umwandeln von über ein Bussystem (4, 4' sowie 5, 5') von einer Druckersteuerung (6) seriell zugeführter Druckinformation in individuelle Ansteuersignale (DS) für die Treiberbausteine zum selektiven Anschalten der Leuchtdioden (LED), **dadurch gekennzeichnet**, daß jeder Leuchtdiodenbaustein (2) für ein im Druckzyklus zeitlich gestaffeltes Aktivieren der Leuchtdioden in $\underline{n}$ mehrzeilige Leuchtdiodengruppen (z. B. LED1, LED3, LED5 ... LED31 bzw. LED98, LED100 ... LED128) unterteilt ist, die quer zur Hauptrichtung der Diodenzeile jeweils zueinander geometrisch versetzt angeordnet sind, daß die Ansteuerbausteine ein Schaltwerk (32) zum Erzeugen von internen,zeitlich gestaffelten Zeitsteuersignalen (z. B. SWE1, SWE2, I-CLK) sowie $\underline{n}$, jeweils einer Leuchtdiodengruppe zugeordnete, von je einem der Zeitsteuersignale gesteuerte Teilschaltungen (33/0 bis 33/3) zum Umsetzen der Druckinformation in gruppenweise zeitlich gestaffelte Ansteuersignale (DS) aufweisen, deren Staffelung im Zeitraster des Druckzyklus von dem jeweiligen geometrischen Versatz der zugeordneten Leuchtdiodengruppe abhängig ist, so daß auf der Ladungsspeichertrommel eine abschnittsweise linear zusammengesetzte Zeile des Ladungsbildes generiert wird.

2. Optischer Zeichengenerator nach Anspruch 1, **dadurch gekennzeichnet**, daß das Bussystem zum Zuführen der Druckinformation aus einem Datenbus (4, 4'), in dem parallel jeweils die Druckinformation für je eine Gruppe von Leuchtdioden eines Leuchtdiodenbausteines übertragbar ist, außerdem aus einem Adreßbus (5, 5') zum gleichzeitigen Übertragen einer zugeordneten Modul- und Bausteinadresse (M, CA) und einer Mehrzahl von Steuerleitungen (z. B. D-CLK) besteht und daß die Ansteuerbausteine jeweils eine Einrichtung (325) zum Decodieren der Adresse sowie an den Datenbus angeschlossene, durch eine decodierte Adresse freischaltbare und durch einen Datentakt (D-CLK) gesteuerte Datenregister (330) und mit diesen verbundene Zwischenregister (331) zum Entkappeln der Übertragung der Druckinformation von der internen, im Ansteuerbaustein durchgeführten Verarbeitung aufweisen.

3. Optischer Zeichengenerator nach Anspruch 2, **dadurch gekennzeichnet**, daß in jedem Ansteuerbaustein (3) die zugehärige Modul- und Bausteinadresse (M, CA) fest verdrahtet vargegeben ist und daß ein an

EP 0 403 476 B1

den Adreßbus (5, 5′) angeschlossener Adreßkomparatar (325) zum Vergleichen der übertragenen aktuellen Adresse mit dieser fest vorgegebenen Adresse vargesehen ist.

4. Optischer Zeichengenerator nach Anspruch 1 oder einem der Ansprüche 2 bzw. 3, **dadurch gekennzeichnet**, daß das Schaltwerk (32) der Ansteuerbausteine (3) einen internen Taktgenerator (322), der durch ein von der Druckersteuerung (6) zugeführtes Zyklustaktsignal (CY-CLK) gesteuert ist und Decodiereinrichtungen (324, 328) aufweist, die entsprechend den n Gruppen von Leuchtdioden bzw. Teilschaltungen (33/0 bis 33/3) an letztere die Zeitsteuersignale (z. B. SWE1 ader SWE2) abgeben, die n-fach voraesehen und die untereinander um den jeweils n-ten Teil (T/n) einer Zyklusperiode vorgegebener Perioden: dauer (T) zeitlich versetzt sind.

5. Optischer Zeichengeneratar nach Anspruch 4, **dadurch gekennzeichnet**, daß der interne Taktgenerator (322) jedes Schaltwerkes (32) als mehrstufiger Binärzähler aufgebaut ist, der über ein von der Druckersteuerung (6) abgegebenes Rücksetzsignal (CY-RES) in einen definierten Ausgangszustand rücksetzbar und durch das Zyklustaktsignal (CY-CLK) gesteuert ist und an seinen Binärstufen Ausgangssignale abgibt, die die Zeitsteuersignale (SC0 ... SC7) bilden, die gegenüber dem Zyklustaktsignal in ihrer Frequenz untersetzt sind und untereinander jeweils verdoppelte Periodendauer aufweisen und daß als Decodiereinrichtung an den Binärzähler eine Decodierschaltung (324) angeschlossen ist, die aus der Kombination der Zeitsteuersignale (SC6 und SC5) mit einer der Zyklusperiode (T) bzw. einer der halben Zyklusperiode entsprechenden Periodendauer Zeitfenstersignale (EN0 ... EN3) ableitet, die zyklisch aufeinanderfolgend die Zyklusperiode in n Zeitabschnitte unterteilen.

6. Optischer Zeichengenerator nach Anspruch 4 oder 5, **dadurch gekennzeichnet**, daß zum Ausgleichen der bezüglich der Leuchtdiodenbausteine (2) spiegelsymmetrischen Anordnung der Ansteuerbausteine (3) und zum Erzielen einer unterschiedlichen Folge der Abläufe in den jeweils auf verschiedenen Seiten der Leuchtdiodenbausteine angeordneten Ansteuerbausteinen in der Zählrichtung umschaltbare Binärzähler (322) vorgesehen sind, die in den einander spiegelsymmetrisch gegenüberliegenden Ansteuerbausteinen mit jeweils entgegengesetzter Zählrichtung betrieben werden, so daß deren Ausgangssignale jeweils zueinander invertiert sind, daß in der Decodierschaltung ein die Zeitfenstersignale (EN0 ... EN3) erzeugender Decoder (3240) sowie ein Multiplexerbaustein (3242), bestehend aus 2-zu-1-Multiplexerstufen, vorgesehen sind, daß dem Binärzähler und dem Multiplexerbaustein jeweils ein Zählrichtungs- bzw. ein Auswahlsignal in Form eines gemeinsamen Umsteuersignales (CB0) fest verdrahtet zugeführt sind und daß die Ausgänge des Binärzählers paarweise mit Eingängen des Multiplexerbausteines in zyklischer Vertauschung derart verbunden sind, daß die einander entsprechenden, als Schreibsteuersignale (SWE1, SWE2) bzw. als interne Übernahmetaktsignale (I-CLK) den Teilschaltungen (33/0 ... 33/3) zugeführten Steuersignale in spiegelsymmetrisch angeordneten Ansteuerbausteinen zeitlich in umgekehrter Reihenfolge auftreten.

7. Optischer Zeichengenerator nach einem der Ansprüche 4 bis 6, **dadurch gekennzeichnet**, daß zum Synchronisieren der Ansteuerbausteine (3) der als Binärzähler (322) ausgebildete interne Taktgenerator einen Übertragsausgang (CY) aufweist, daß eine Entstörlogik (323) vorgesehen ist, die an den Übertragsausgang angeschlossen ist und außerdem einen Eingang aufweist, dem ein von der Druckersteuerung (6) am Ende eines Verarbeitungszyklus abgegebenes Synchronisierungssignal (SYNC) zugeführt ist, daß die Entstörlogik zum Bewerten der zeitlichen Reihenfolge des Übertragssignales und des Synchronisationssignales ein logisches Netzwerk (3230...3233) besitzt, das im Falle des Voreilens des Übertragssignales ein Fehlersignal (SYNC-ERR) an die Druckersteuerung (6) abgibt und daß die Entstörlogik einen Rücksetzeingang aufweist, dem das von der Druckersteuerung (6) auch im Falle eines Synchronisierungsfehlers generierte Rücksetzsignal (CY-RES) zum Rücksetzen in einen definierten Anfangszustand zugeführt ist.

8. Optischer Zeichengenerator nach einem der Ansprüche 2 bis 7, **dadurch gekennzeichnet**, daß das Anschaltintervall ($T_{ON}$) jeder einzelnen Leuchtdiode (LED) individuell festgelegt ist, um bei Ansteuerung der Leuchtdioden mit unterschiedlicher individueller Strahlungsleistung eine einheitliche Strahlungsenergie sicherzustellen, daß dazu jede Teilschaltung (33/0 bis 33/3) der Ansteuerbausteine (3) neben dem Datenregister (330) und dem damit verbundenen Zwischenregister (331) eine Intervallsteuerung (332, 333) aufweist, die für jede der Teilschaltung zugeordnete Leuchtdiode (z. B. LED1, LED3 ... oder LED31) ein individuelles Intervallsignal (Tsi) abgibt, das das Arschaltintervall bestimmt und daß eine UND-Schaltung (334) vorgesehen ist, in der jeweils ein UND-Glied eingangsseitig mit je einem Ausgang des zugeordneten Zwischenregisters und der Intervallsteuerung verbunden ist und die ausgangsseitig mit einem der Eingänge des Treiberbausteines (34) verbunden ist.

9. Optischer Zeichengenerator nach Anspruch 8, **dadurch gekennzeichnet**, daß die Intervallsteuerung einen Korrekturwertspeicher (332) und einen damit verbundenen Zeitwertkomparator (333) aufweist, daß der Zeitwertkomparator, dem aus einer Taktsignalfolge (CY-CLK bzw. TB-CLK) durch Frequenzteilung abgeleitete Zeitsteuersignale (SC1,4; SC5 bzw. TB1...TB4, MOD) zugeführt sind, derart aufgebaut ist, daß aus diesen Zeitsteuersignalen ein Zeitbasisintervall (B) ableitbar ist und daß in dem Korrekturwertspeicher für jede zugeo-

15

rdnete Leuchtiode (LEDi) ein individueller Korrekturwert (Ki) gespeichert ist, der ein Korrekturintervall festlegt, um das das Zeitbasisintervall verlängert ist, wobei die Zeitdauer des individuellen Anschaltsignals (TSi) jeder Leuchtdiode ein Vielfaches der Periode der steuernden Taktsignalfolge ist.

10. Optischer Zeichengeneratar nach Anspruch 9, **dadurch gekennzeichnet**, daß der Korrekturwertspeicher (332) für jeden Korrekturwert (Ki) einen Speicherplatz mit einer Bitkapazität besitzt, die es ermöglicht, in binärer Codierung bis zu einer vorgegebenen maximalen Länge das Korrekturintervall in Vielfachen der Periode der steuernden Taktsignalfolge (CY-CLK bzw. TB-CLK) anzugeben, daß der Zeitwertkomparator (333) aus Teilschaltungen aufgebaut ist, deren Anzahl der Zahl der zugeordneten Leuchtdioden (z. B. LED1, LED3...LED31) entspricht, daß in jeder Teilschaltung neben einem RS-Flipflop (3332), das durch das Zustandssignal (SC5 bzw. MOD) mit einer Periodendauer von der Länge der maximalen Anschaltzeit der Leuchtdioden gesetzt wird und damit das Intervallsignal (TSi) abgibt weiterhin eine Exklusiv-ODER-Schaltung (3335) vorgesehen ist, an deren Eingänge parallel die Ausgänge eines Speicherplatzes des Korrekturwertspeichers angeschlossen und darüber hinaus diejenigen Zeitsteuersignale (SC1 bis SC4 bzw. TB1...TB4) mit einer Periodendauer von jeweils geradzahligen Bruchteilen der maximalen Anschaltzeit der Leuchtdioden herangeführt sind und deren Ausgang mit dem Rücksetzeingang des RS-Flipflops verbunden ist.

11. Optischer Zeichengenerator nach einem der Ansprüche 9 oder 10, **dadurch gekennzeichnet**, daß für die Ableitung des Zeitbasisintervalles für die Zeitwertkomparatoren (333) das von der Druckersteuerung (6) gelieferte Zyklustaktsignal (CY-CLK) verwendet wird, wobei der Binärzähler (322) des Schaltwerkes (32) die ersten Zeitsteuersignale (SC1..,SC4) und ein weiteres zweites Zeitsteuersignal (SC5) als Ausgangssignale seiner fünf niederwertigen Zählstufen liefert und damit die Zeitwertkomparatoren synchron zum Ablauf des Verarbeitungszyklus angesteuert sind.

12. Optischer Zeichengenerator nach einem der Ansprüche 9 oder 10, **dadurch gekennzeichnet**, daß ein weiterer Synchronzähler (1502) vorgesehen ist, der durch eine weitere von der Druckersteuerung (6) gelieferte Taktsignalfolge (TB-CLK) gesteuert ist, die asynchron zum Zyklustaktsignal (CY-CLK) und in ihrer Frequenz mindestens so hoch liegt wie diese Zyklustaktsignalfolge, daß dieser in seinem Ein- bzw. Ausschaltmodus durch das zweite Zustandssignal (SC5) gesteuerte Synchronzähler an den Ausgängen seiner Zählstufen Zeitsteuersignale (TB1...TB4, MOD) abgibt, die einem der Zeitwertkomparatoren (333) zugeführt sind und diesen damit asynchron zum Ablauf des Verarbeitungszyklus steuern.

13. Optischer Zeichengenerator nach Anspruch 12, **dadurch gekennzeichnet**, daß dem Synchronzähler (1502) ein Zustandsflipflop (1500) zum Festlegen seines Ein- bzw. Ausschaltmodus zugeordnet ist, das durch d;s zweite Zeitsteuersignal (SC5) gesetzt bzw. ausgelöst durch ein Übertragssignal (CARRY) des Synchronzählers rückgesetzt wird und dessen Ausgang an einen Enable-Eingang des Synchronzählers angeschlossen ist.

14. Optischer Zeichengenerator nach Anspruch 13, **dadurch gekennzeichnet**, daß dem Synchronzähler (1502) ein weiteres Zustandsflipflop (1501) zum Einstellen eines definierten Anfangszustandes zugeordnet ist, das ebenfalls durch das zweite Zeitsteuersignal (SC5) gesetzt wird, dessen Ausgang mit einem Clear-Eingang des Synchronzählers (1502) verbunden ist und das durch ein den rückgesetzten Zustand aller Zählstufen des Synchronzählers überwachendes Decodiernetzwerk (1503 bis 1508) rücksetzbar ist.

15. Optischer Zeichengenerator nach einem der Ansprüche 9 bis 14, **dadurch gekennzeichnet**, daß der Korrekturwertspeicher (332) der Intervallsteuerung (332, 333) an die parallelen Ausgänge des zugeordneten Zwischenregisters (331) der Teilschaltung (33/0, 33/1, 33/2 bzw. 33/3) zum bitweisen Laden von aktualisierten Korrekturwerten (Ki) angeschlossen ist, die in einem Ladezyklus in die Ansteuerbausteine (3) übertragen werden und daß die Intervallsteuerung jeweils einen Freigabeeingang (EN) aufweist, dem zum Freigeben der bitweisen Übernahme der Korrekturwerte eines der zweiten Schreibsteuersignale (SWE21 bis SWE25) zugeführt wird, die im Schaltwerk (32) bei Auftreten eines von der Druckersteuerung (6) abgegebenen Ladesteuersignales (LD-EN) generiert werden.

16. Optischer Zeichengenerator nach Anspruch 15, **dadurch gekennzeichnet**, daß das Schaltwerk (32) unter der Annahme m-stelliger Korrekturwerte (Ki) eine weitere Decodierschaltung (328) zum Erzeugen der zweiter Schreibsteuersignale,(SWE20 bis SWE25) aufweist, in der ein Decoder (3281), dem Zeitsteuersignale (SC7, SC8) mit einer dem Mehrfachen einer Zyklusperiode entsprechenden Periode zum Festlegen von m aufeinanderfolgender, durch Fenstersignale (LDSQ0 bis LDSQ3) gekennzeichnete Ladesequenzen zugeführt werden und in der ein weiterer Multiplexerbaustein (3282) vorgesehen sind, dem das Ladesteuersignal (LD-EN) als Freigabesignal und das Umsteuersignal (CB0) als Auswahlsignal zugeführt ist und der mehrere 2-zu-1-Multiplexerstufen aufweist, an deren Eingänge die Ausgangssignale des Decoders paarweise in zyklischer Vertauschung angeschlossen sind, so daß deren Ausgänge jeweils eines der zweiten Schreibsteuersignale (SWE21 bis SWE25) abgeben, mit denen in Abhängigkeit von dem Umsteuersignal in-zueinander umgekehrter zeitlicher Reihenfolge die einzelnen Korrekturwertspeicher (331) der Teilschaltungen (33/0 bis 33/1) zum bitweisen Einspeichern von Korrekturwerten vorbereitbar sind.

17. Optischer Zeichengenerator nach einem der Ansprüche 8 bis 16, **dadurch gekennzeichnet**, daß im Schaltwerk (32) jedes Ansteuerbausteines (3) zum bausteinbezogene.n Abgleichen der Treiberströme im Treiberbaustein (34) eine Abstimmeinrichtung (326, 327) vorgesehen ist, der eine von der Druckersteuerung (6) abgegebene Steuerspannung (V/I-LED) zugeführt ist und die in Abhängigkeit von einem für den zugeordneten Treiberbaustein individuellen Feinabgleichwert diese Steuerspannung korrigiert und ein Analogsignal (ASW) abgibt und daß zwischen den UND-Schaltungen (334) und den parallelen Eingängen des zugeordneten Treiberbausteines in jeder Teilschaltung (33/0 ... 33/3) der Verarbeitungseinheit (3) Analogschalter (336) vorgesehen sind, deren gesteuerten Eingängen parallel das Analogsignal zugeführt ist, deren Steuereingänge mit jeweils einem Ausgang der zugeordneten UND-Schaltung verbunden sind und deren Ausgänge jeweils eines der Ansteuersignale (DS) an den jeweils zugeordneten Eingang des Treiberbausteines abgeben.

18. Optischer Zeichengenerator nach Anspruch 17, **dadurch gekennzeichnet** , daß die Abstimmeinrichtung als Speicher ein ladbares Register (327), das im Verlauf eines Ladezyklus, freigeschaltet durch ein weiteres der zweiten Schreibsteuersignale (SWE26), mit einem digitalisierten Feinabgleichwert ladbar ist und außerdem einen programmierbaren Digital/Analog-Wandler (326) aufweist, der in Abhängigkeit von dem aus dem Register ausgelesenen Feinabgleichwert die von der Druckersteuerung (6) zugeführte Steuerspannung (V/I-LED) korrigiert.

19. Optischer Zeichengenerator nach Anspruch 17 oder 18, **dadurch gekennzeichnet** , daß in den Teilschaltungen (33/C ... 33/3) der Verarbeitungseinheit (3) zwischen den UND-Schaltungen (334) und den Analogschaltern (336) weitere UND-Schaltungen (335) vorgesehen sind, deren erste Eingänge jeweils an einen Ausgang der UND-Schaltung (334) angeschlossen und deren zweiten Eingängen in jeder Teilschaltung parallel jeweils eines von weiteren Schaltsignalen (SG0 ... SG3) zugeführt ist, die die erste Decoderschaltung (324) des Schaltwerkes (32) zum gesteuerten Durchschalter. der Ansteuersignale (DS) an die Treiberstufen des zugeordneten Treiberbausteines (34) generiert.

## Claims

1. Optical character generator of an electro photographic printer for generating a charge image on a revolving charge storage drum in the form of micro-image lines generated continuously in in each case one printing cycle, comprising a plurality of modules (1) arranged in the form of rows, consisting of a plurality of light-emitting diode chips (2) having in each case light-emitting diodes (LED) which are in each case arranged row by row underneath one another and are at the same time offset with respect to one another, of driver chips (34) associated with the latter on both sides and of drive chips (3) connected to the latter for buffer storage and conversion of printing information, serially supplied by a printer control (6) via a bus system (4, 4' and 5, 5'), into individual drive signals (DS) for the drive chips for selectively switching-on the light-emitting diodes (LED), characterised in that each light-emitting diode chip (2) for an activation of the light-emitting diodes which is temporally staggered in the printing cycle, is subdivided into $\underline{n}$ multi-row light-emitting diode groups (for example LED1, LED3, LED5 ...LED31 and LED98, LED100 ...LED128) which are in each case arranged geometrically offset with respect to one another transversely to the main direction of the diode row, in that the drive chips exhibit a switching unit (32) for generating internal temporally staggered sequence control signals (for example SWE1, SWE2, I-CLK) and $\underline{n}$ part-circuits (33/0 to 33/3) in each case associated with one light-emitting diode group and controlled by in each case one of the sequence control signals, for converting the printing information into drive signals (DS) which are temporally staggered group by group and the staggering of which in the timing pattern of the printing cycle is dependent on the respective geometric offset of the associated light-emitting diode group so that a charge image line which is linearly assembled section by section is generated on the charge storage drum.

2. Optical character generator according to Claim 1, characterised in that the bus system for supplying the printing information consists of a data bus (4,4'), in which in each case the printing information can be transferred in parallel for one group each of light-emitting diodes of a light-emitting diode chip, additionally of an address bus (5, 5') for the simultaneous transmission of an associated module and chip address (M, CA) and a plurality of control lines (for example D-CLK), and in that the drive chips in each case exhibit a device (325) for decoding the address and data registers (330), which are connected to the data bus and which can be enabled by a decoded address and are controlled by a data clock (D-CLK) and buffer registers (331), which are connected to the data registers, for decoupling the transmission of the printing information from the internal processing performed in the drive chip.

3. Optical character generator according to Claim 2, characterised in that the associated module and chip address (M, CA) is predetermined hardwired in each drive chip (3) and in that an address comparator (325) connected to the address bus (5, 5') is provided for comparing the instantaneous address transmitted with this specifically predetermined address.

4. Optical character generator according to Claim 1 or one of Claims 2 or 3, characterised in that the switching unit (32) of the drive chips (3) exhibits an internal clock generator (322) which is controlled by a cycle clock signal (CY-CLK) supplied from the printer control (6), and decoding devices (324, 328) which, in accordance with the n groups of light-emitting diodes or part-circuits (33/0 to 33/3) output to the latter the sequence control signals (for example SWE1 or SWE2) which are provided n times and which are temporally offset with respect to one another by the in each case nth part (T/n) of a cycle period of predetermined period duration (T).

5. Optical character generator according to Claim 4, characterised in that the internal clock generator (322) of each switching unit (32) is constructed as a multi-stage binary counter which can be reset into a defined initial state via a reset signal (CY-RES) output by the printer control (6) and is controlled by the cycle clock signal (CY-CLK) and outputs at its binary stages output signals which form the sequence control signals (SC0 ...SC7) frequency reduced in with respect to the cycle clock signal and which exhibit double the period duration with respect to one another in each case and in that, as decoding device, the binary counter is connected to a decoding circuit (324) which derives, from the combination of the sequence control signals (SC6 and SC5) with a period duration corresponding to the cycle period (T) or to half the cycle period, time window signals (EN0 ...EN3) which cyclically successively subdivide the cycle period into n time intervals.

6. Optical character generator according to Claim 4 or 5, characterised in that for compensating for the arrangement of the drive chips (3), which is mirror-symmetrical with respect to the light-emitting diode chips (2), and for achieving a different sequence of sequences in the drive chips arranged in each case on different sides of the light-emitting diode chips, binary counters (322) are provided which can be switched over in the direction of counting and which are operated in the mutually mirror-symmetrically opposite drive chips with in each case the opposite counting direction so that their output signals are in each case inverted with respect to one another, in that in the decoding circuit a decoder (3240) generating the time window signals (EN0 ...EN3) and a multiplexer chip (3242) consisting of 2-to-1 multiplexer stages are provided, in that the binary counter and the multiplexer chip are in each case supplied hardwired with a counting direction or a selection signal in the form of a common change-over signal (CB0) and in that the outputs of the binary counter are connected in pairs to inputs of the multiplexer chip in cyclical interchange in such a manner that the mutually corresponding control signals supplied to the part circuits (33/0 ...33/3) as write control signals (SWE1, SWE2) or as internal transfer clock signals (I-CLK) occur temporally in the reversed order in mirror-symmetrically arranged drive chips.

7. Optical character generator according to one of Claims 4 to 6, characterised in that for the purpose of synchronising the drive chips (3), the internal clock generator constructed as binary counter (322) exhibits a carry output (CY), in that an interference suppression logic (323) is provided which is connected to the carry output and also exhibits an input which is supplied with a synchronisation signal (SYNC) output by the printer control (6) at the end of a processing cycle, in that the interference suppression logic, for evaluating the temporal sequence of the carry signal and of the synchronisation signal, has a logic network (3230 ...3233) which, in the case of an advance of the carry signal, outputs an error signal (SYNC-ERR) to the printer control (6) and in that the interference suppression logic exhibits a reset input which is supplied with the reset signal (CY-RES) also generated by the printer control (6) in the case of a synchronisation error, for resetting into a defined initial state.

8. Optical character generator according to one of Claims 2 to 7, characterised in that the on interval ($T_{ON}$) of each individual light-emitting diode (LED) is individually determined in order to ensure a uniform radiation energy when driving the light-emitting diodes with different individual radiation power, in that for this purpose each part-circuit (33/0 to 33/3) of the drive chips (3) exhibits, in addition to the data register (330) and the associated buffer register (331), an interval control (332, 333) which outputs for each light-emitting diode (for example LED1, LED3 ... or LED31) associated with the part-circuit an individual interval signal (Tsi) which determines the on interval, and that an AND circuit (334) is provided in which in each case the input of an AND gate is connected to an output of the associated buffer register and of the interval control and the output of which is connected to one of the inputs of the driver chip (34).

9. Optical character generator according to Claim 8, characterised in that the interval control exhibits a correction value store (332) and an associated time value comparator (333), in that the time value comparator, which is supplied with sequence control signals (SC1, 4; SC5 or TB1 ...TB4, MOD) derived by frequency division from a clock signal sequence (CY-CLK or TB-CLK, respectively), is constructed in such a manner that a time base interval (B) can be derived from these sequence control signals and in that in the correction value store, for each associated light-emitting diode (LEDi) an individual correction value (Ki) is stored which defines a correction interval by which the time base interval is extended, the time duration of the individual on signal (TSi) of each light-emitting diode being a multiple of the period of the controlling clock signal sequence.

10. Optical character generator according to Claim 9, characterised in that the correction value store (332) has for each correction value (Ki) a storage space having a bit capacity which makes it possible to specify the correction interval in multiples of the period of the controlling clock signal sequence (CY-CLK or TB-CLK) in binary coding up to a predetermined maximum length, in that the time value comparator (333) is constructed of part-circuits the number of which corresponds to the number of associated light-emitting diodes (for example LED1, LED3 ...LED31), in that in each part-circuit, in addition to an RS flipflop (3332), which is set by the state signal (SC5 or MOD) having a period duration of the length of the maximum on time of the light-emitting diodes and thus outputs the interval signal (TSi), an exclusive OR circuit (3335) is also provided to the inputs of which the outputs of a storage space of the correction value store are connected in parallel and, in addition, the sequence control signals (SC1 to SC4 or TB1 ...TB4) having a period duration of in each case integral fractions of the maximum on time of the light-emitting diodes are applied and the output of which is connected to the reset input of the RS flipflop.

11. Optical character generator according to one of Claims 9 or 10, characterised in that the cycle clock signal (CY-CLK) supplied from the printer control (6) is used for deriving the time base interval for the time value comparators (333), in which arrangement the binary counter (322) of the switching unit (32) supplies the first sequence control signals (SC1 ...SC4) and a further second sequence control signal (SC5) as output signals of its five low-significance counting stages and thus the time value comparators are driven synchronously to the progress of the processing cycle.

12. Optical character generator according to one of Claims 9 or 10, characterised in that a further synchronous counter (1502) is provided which is controlled by a further clock signal sequence (TB-CLK) supplied by the printer control (6), which sequence is asynchronous to the cycle clock signal (CY-CLK) and the frequency of which is at least as high as this cycle clock signal sequence, in that this synchronous counter, the on or off mode of which is controlled by the second state signal (SC5), outputs at the outputs of its counting stages sequence control signals (TB1 ...TB4, MOD) which are supplied to one of the time value comparators (333) and thus control the latter asynchronously to the progress of the processing cycle.

13. Optical character generator according to Claim 12, characterised in that the synchronous counter (1502) is associated with a state flipflop (1500) for defining its on or off mode, which is set by the second sequence control signal (SC5) or is reset triggered by a carry signal (CARRY) of the synchronous counter, and the output of which is connected to an enable input of the synchronous counter.

14. Optical character generator according to Claim 13, characterised in that the synchronous counter (1502) is associated with a further state flipflop (1501) for setting a defined initial state, which is also set by the second sequence control signal (SC5), the output of which is connected to a clear input of the synchronous counter (1502) and which can be reset by a decoding network (1503 to 1508) which supervises the reset state of all counting stages of the synchronous counter.

15. Optical character generator according to one of Claims 9 to 14, characterised in that the correction value store (332) of the interval control (332, 333) is connected to the parallel outputs of the associated buffer register (331) of the part-circuit (33/0, 33/1, 33/2 or 33/3) for the bit-by-bit loading of updated correction values (Ki) which are transferred into the drive chips (3) in a loading cycle, and in that the interval control in each case exhibits an enable input (EN) which is supplied, for enabling the bit-by-bit transfer of the correction values, with one of the second write control signals (SWE21 to SWE25) which are generated in the switching unit (32) when a load control signal (LD-EN) output by the printer control (6) occurs.

16. Optical character generator according to Claim 15, characterised in that the switching unit (32), assuming m-digit correction values (Ki), exhibits a further decoding circuit (328) for generating the second write control signals (SWE20 to SWE25), in which a decoder (3281) is provided which is supplied with sequence control signals (SC7, SC8) with a period corresponding to the multiple of a cycle period for defining m successive loading sequences identified by window signals (LDSQ0 to LDSQ3) and in which a further multiplexer chip (3282) is provided, which is supplied with the loading control signal (LD-EN) as enable signal and with the change-over signal (CB0) as selection signal and which exhibits several 2-to-1 multiplexer stages to the inputs of which the output signals of the decoder are connected in pairs in cyclic interchange so that their outputs in each case output one of the second write control signals (SWE21 to SWE25) by means of which the individual correction value stores (331) of the part-circuits (33/0 to 33/1) can be prepared for storing correction values bit by bit in dependence on the change-over signal in mutually reversed time sequence.

17. Optical character generator according to one of Claims 8 to 16, characterised in that in the switching unit (32) of each drive chip (3), for the chip-related calibration of the driver currents in the driver chip (34), an alignment device (326, 327) is provided which is supplied with a control voltage (V/I-LED) output by the printer control (6) and which corrects this control voltage in dependence on a fine calibration value which is individual for the associated driver chip and outputs an analog signal (ASW), and in that between the AND circuits (334) and the parallel inputs of the associated driver chip in each part-circuit (33/0 ...33/3) of the processing unit (3), analog switches (336) are provided the controlled inputs of which are supplied in parallel with the analog signal, the control inputs of which are connected to in each case one output of the associated AND circuit and the outputs of which in each case output one of the drive signals (DS) to the in each case associated input of the driver chip.

18. Optical character generator according to Claim 17, characterised in that the alignment device exhibits as store a loadable register (327) which can be loaded with a digitized fine calibration value in the course of a loading cycle, enabled by a further one of the second write control signals (SWE26) and also exhibits a programmable digital/analog converter (326) which corrects the control voltage (V/I-LED) supplied by the printer control (6) in dependence on the fine calibration value read out of the register.

19. Optical character generator according to Claim 17 or 18, characterised in that in the part-circuits (33/0 ...33/3) of the processing unit (31), between the AND circuits (334) and the analog switches (336), further AND circuits (335) are provided the first inputs of which are in each case connected to one output of the AND circuit (334) and the second inputs of which in each part-circuit are supplied in parallel with in each case one of further switching signals (SG0 ...SG3), which are generated by the first decoder circuit (324) of the switching unit (32) for the controlled switching-through of the drive signals (DS) to the driver stages of the associated driver chip (34).

**Revendications**

1. Générateur optique de caractères pour une imprimante électrophotographique, pour la production d'une image de charges sur un tambour rotatif d'accumulation de charges, sous la forme de micro-lignes d'images produites en permanence respectivement pendant un cycle d'impression, et comportant une multiplicité de modules (1) disposés suivant des lignes et constitués par une multiplicité d'ensembles de diodes à luminescence (2) comportant respectivement des diodes à luminescence disposées ligne-par-ligne les unes au-dessous des autres en étant simultanément décalées les unes par rapport aux autres, par des unités à étages d'attaque (34) associées des deux côtés à ces diodes et par des unités de commande (3) raccordées aux unités précédentes pour mémoriser temporairement et convertir une information d'impression envoyée en série par une unité de commande (6) de l'imprimante par l'intermédiaire d'un système de bus (4,4′ ainsi que 5,5′) en des signaux individuels de commannde (DS) pour des unités formant étages d'attaque de manière à raccorder sélectivement des diodes à luminescence (LED), caractérisé par le fait que chaque ensemble de diodes à luminescence (2) est utilisé, pour une activation des diodes à luminescence échelonnée dans le temps pendant le cycle d'impression, en $\underline{n}$ groupes de plusieurs lignes de diodes à luminescence (par exemple LED1,LED3,LED5... LED31 ou LED98,LED100...LED128), qui sont disposées en étant respectivement décalées géométriquement les unes par rapport aux autres transversalement par rapport à la direction principale de la ligne de diodes, que les unités de commande comportent une unité de commutation (32) servant à produire des signaux internes de commande temporelle échelonnés dans le temps (par exemple SWE1,SWE2,I-CLK) ainsi que $\underline{n}$ circuits partiels (33/0 à 33/3) associés respectivement à un groupe de diodes à luminescence et commandés par respectivement l'un des signaux de commande temporelle, pour la conversion de l'information d'impression en des signaux de commande (DS) échelonnés dans le temps par groupes et dont l'échelonnement dans la trame temporelle du cycle d'impression dépend du décalage géométrique respectif des groupes associés de diodes à luminescence, de sorte qu'une ligne de l'image de charges, assemblée de façon linéaire par sections, est produite sur le tambour d'accumulation de charges.

2. Générateur optique de caractères suivant la revendication 1, caractérisé par le fait que le système de bus servant à envoyer l'information d'impression est formé par un bus de transmission de données (4,4′) dans lequel l'information d'impression pour respectivement un groupe de diodes à luminescence d'un ensemble de diodes à luminescence peut être transmise respectivement en parallèle, et en outre par un bus de transmission d'adresses (5,5′) servant à transmettre simultanément une adresse (M,CA) d'un module et d'un ensemble, et par une multiplicité de lignes de commande (par exemple D-CLK), et que les unités de commande contiennent respectivement un dispositif (325) pour le décodage de l'adresse ainsi que des registres de données (330) raccordés au bus de transmission de données et pouvant être commutés librement par une adresse décodée et commandés par une cadence de données (D-CLK), et des registres intermédiaires (331) raccordés à ces registres de données pour le découplage de la transmission de l'information d'impression par rapport au traitement interne exécuté dans l'unité de commande.

3. Générateur optique de caractères suivant la revendication 2, caractérisé par le fait que dans chaque unité de commande (3), l'adresse associée (M,CA) du module et de l'unité est prédéterminée par câblage fixe et qu'il est prévu un comparateur d'adresses (325) raccordé au bus de transmission d'adresses (5,5′) pour comparer l'adresse actuelle transmise à cette adresse prédéterminée de façon fixe.

4. Générateur optique de caractères suivant la revendication 1 ou l'une des revendications 2 ou 3, caractérisé par le fait que l'unité de commutation (32) des unités de commande (3) comporte un générateur de cadence interne (322), qui est commandé par un signal de cadence de cycle (CY-CLK) envoyé par l'unité de commande (6) de l'imprimante et des dispositifs de décodage (324,328), qui, en fonction des n groupes de diodes à luminescence ou circuits partiel: (33/0 à 33/3), envoient à ces derniers des signaux de commande temporelle (par exemple SWE1 ou SWE2), qui sont prévus n fois et qui sont décalés entre eux dans le temps, de la n-ème partie respective (T/n) d'une période du cycle possédant la durée prédéterminée (T).

5. Générateur optique de caractères suivant la revendication 4, caractérisé par le fait que le générateur interne de cadence (322) de chaque unité de commutation (32) est réalisé sous la forme d'un compteur binaire à plusieurs étages, qui peut être ramené dans un état initial défini par l'intermédiaire d'un signal de remise à l'état initial (CY-RES) délivré par l'unité de commande (6) de l'imprimante et est commandé par le signal de cadence de cycle (CY-CLK) et envoie à ces étages binaires des signaux de sortie, qui forment les signaux de commande temporelle (SC0...SC7), dont la fréquence est réduite par division par rapport au signal de cadence de cycle et qui possèdent entre eux une durée de période respectivement double et qu'au compteur binaire est raccordé, en tant que dispositif de décodage, un circuit de décodage (324), gui délivre, à partir de la combinaison des signaux de commande temporels (SC6 et SC5) avec une durée de période correspondant à la période du cycle (T) ou à la moitié de la période du cycle, des signaux de fenêtres temporelles (EN0...EN3) qui subdivisent successivement et de façon cyclique la période du cycle en n intervalles de temps.

6. Générateur optique de caractères suivant la revendication 4 ou 5, caractérisé par le fait que pour l'équilibrage de la disposition des unités de commande (3), symétrique par rapport aux ensembles de diodes à luminescence (2), et pour l'obtention d'une succession différente des exécutions dans les unités de commande disposées respectivement sur des côtés différents des ensembles de diodes à luminescence, il est prévu des compteurs binaires (322) dont le sens de comptage peut être commuté et qui fonctionnent, dans les unités de commande qui sont disposées symétriquement en vis-à-vis, avec des sens de comptage réciproquement opposés, de sorte que leurs signes de sortie sont respectivement inversés réciproquement, que dans le circuit de décodage, il est prévu un décodeur (3240), qui produit les signaux de fenêtre temporelles (EN0...EN3), ainsi qu'une unité de multiplexeur (3242) constituée par des étages de multiplexage 2-à-1, que respectivement un signal du sens de comptage ou un signal de sélection est envoyé, d'une manière câblée de façon fixe, sous la forme d'un signal commun d'inversion de commande (CB0) au compteur binaire et à l'unité de multiplexeur et que les sorties du compteur binaire sont raccordées par couples à des entrées de l'unité de multiplexeur, selon une permutation cyclique, de sorte que les signaux de commande, qui se correspondent et qui sont envoyés en tant que signaux de commande d'enregistrement (SW1,SW2) ou en tant que signaux internes de cadence de report (I-CLK), aux circuits partiels (33/0...33/3), apparaissent selon une séquence inversée dans le temps, dans des unités de commande disposées symétriquement.

7. Générateur optique de caractères suivant l'une des revendications 4 à 6, caractérisé par le fait que pour la synchronisation des unités de commande (3), le générateur interne de cadence, réalisé sous la forme d'un compteur binaire (322), possède une sortie de report (CY), qu'il est prévu une logique d'antiparasitage (323), qui est raccordée à la sortie de report et qui possède en outre une entrée, à laquelle est envoyé un signal de synchronisation (SYNC) délivré par l'unité de commande (6) de l'imprimante à la fin d'un cycle de traitement, que la logique d'antiparasitage possède, pour l'évaluation de la séquence temporelle des signaux de report et du signal de synchronisation, un réseau logique (3230...3233), qui, dans le cas où le signal de report est en avance, envoie un signal d'erreur (SYNC-ERR) à l'unité de commande (6) de l'imprimante et que la logique d'antiparasitage possède une entrée de remise à l'état initial, à laquelle le signal de remise à l'état initial (CY-RES), produit par l'unité de commande (6) de l'imprimante également dans le cas d'un défaut de synchronisation, est envoyé pour réaliser la remise dans un état initial défini.

8. Générateur optique de caractères suivant l'une des revendications 2 à 6, caractérisé par le fait que l'intervalle de raccordement ($T_{ON}$) de chaque diode à luminescence individuelle (LED) est fixé d'une manière individuelle afin de garantir une énergie de rayonnement uniforme, lors de la commande des diodes à luminescence avec des puissances individuelles de rayonnement différentes, qu'à cet effet chaque circuit partiel (33/0 à 33/3) des unités de commande (3) comporte, en dehors du registre de données (330) et du registre intermédiaire (331), qui est raccordé au registre précédent, une unité de commande d'intervalles (332,333), qui, pour chaque diode à luminescence (par exemple LED1,LED3... ou LED31) associée au circuit partiel, délivre un signal individuel d'intervalle ($T_{si}$), qui détermine l'intervalle de raccordement, et qu'il est prévu un circuit ET (334), dans lequel respectivement un élément ET est raccordé, côté entrée, respectivement à une sortie du registre intermédiaire associé et à l'unité de commande d'intervalles et qui est raccordé, côté sortie, à l'une des entrées de l'unité formant étage d'attaque (34).

9. Générateur optique de caractères suivant la revendication 8, caractérisé par le fait que l'unité de commande d'intervalles possède une mémoire de valeurs de correction (132) et un comparateur de valeurs de temps (333), raccordé à cette mémoire, que le comparateur de valeurs de temps, auquel sont envoyées des signaux de commande temporelle (SC1,4; SC5 ou TB1...TB4,MOD) tirés de la séquence de signaux de cadence (CY-CLK ou TB-CLK) par division de fréquence, est agencé de telle sorte qu'un intervalle de base de temps (B) peut être obtenu à partir de ces signaux de commande temporelle et que dans la mémoire de valeurs de correction est mémorisée, pour chaque diode à luminescence (LEDi) associée, une valeur individuelle de correction (Ki), qui fixe un intervalle de correction dont est prolongé l'intervalle de base de temps, la durée du signal individuel de raccordement (Tsi) de chaque diode à luminescence étant égal à un multiple de la période de la séquence de signaux de cadence réalisant la commande.

10. Générateur optique de caractères selon la revendication 9, caractérisé en ce que la mémoire de valeur: de correction (332) pour chaque valeur de correction (Ki) possède un emplacement de mémoire possédant une capacité en bits, qui permet d'indiquer, selon un codage binaire, jusqu'à une longueur maximale prédéterminée, l'intervalle de correction selon des multiples de la période de la succession de signaux de cadence (CY-CLK ou TB-CLK) réalisant la commande, que le comparateur de valeurs de temps (333) est constitué par des circuits partiels, dont le nombre correspond au nombre des diodes à luminescence associées (par exemple LED1,LED3...LED31), que dans chaque circuit partiel il est prévu, en dehors d'une bascule bistable de type RS (3332), qui est positionnée par le signal d'état (SC5 ou MOD) possédant une période d'une durée égale à la durée maximale de raccordement des diodes à luminescence et qui délivre par conséquent le signal d'interval le (TSi), également un circuit OU-Exclusif (3335), aux entrées duquel sont raccordées en parallèle les sorties d'un emplacement de la mémoire de valeurs de correction et sont envoyés en outre les signaux de commande temporelle (SC1 à SC4 ou TB1...TB4) possédant une période d'une durée égale à des fractions paires respectives de la durée maximale de raccordement des diodes à luminescence, et dont la sortie est raccordée à l'entrée de remise à l'état initial de la bascule bistable de type RS.

11. Générateur optique de caractères suivant l'une des revendications 9 ou 10, caractérisé par le fait que pour l'obtention d'un intervalle de base pour les comparateurs de valeurs de temps (333), on utilise le signal de cadence de cycle (CY-CLK) délivré par l'unité de commande (6) de l'imprimante, auquel cas le compteur binaire (322) de l'unité de commutation (32) délivre les premiers signaux de commande temporelle (SC1...SC4) et un autre second signal de commande temporelle (SC5) en tant que signaux de sortie de ses cinq étages de comptage de poids les plus faibles et par conséquent les comparateurs de valeurs de temps sont commandés en synchronisme avec l'exécution du cycle de traitement.

12. Générateur optique de caractères suivant l'une des revendications 9 ou 10, caractérisé par le fait qu'il est prévu un autre compteur synchrone (1502), qui est commandé par une autre séquence de signaux de cadence (TB-CLK) qui est délivrée par l'unité de commande (6) de l'imprimante et qui est asynchrone avec le signal de cadence de cycle (CY-CLK) et dont la fréquence est au moins aussi élevée que cette séquence de signaux de cadence de cycle, que ce compteur synchrone, qui est placé dans son mode branché ou débranché par le second signal d'état (SC5), délivre aux sorties de ces étages de comptage, des signaux de commande temporels (TB1...TB4, MOD), qui sont envoyés à l'un des comparateurs des valeurs de temps (333) et commandent ce dernier de façon asynchrone pour l'exécution du cycle de traitement.

13. Générateur optique de caractères suivant la revendication 12, caractérisé par le fait qu'au compteur synchrone (42) est associée une bascule bistable d'état (1500) servant à fixer son mode de branchement ou de débranchement et qui est positionnée par le second signal de commande temporelle (SC5) ou est ramenée à l'état initial d'une manière déclenchée par un signal de report (CARRY) du compteur synchrone et dont la sortie est raccordée à une entrée de validation du compteur synchrone.

14. Générateur optique de caractères suivant la revendication 13, caractérisé par le fait qu'au compteur synchrone (1502) est associée une autre bascule bistable d'état (1501) qui sert à régler un état initial défini et qui est également positionnée par le second signal de commande temporel (SC5), dont la sortie est raccordée à une entrée d'effacement du compteur synchrone (1502) et qui peut être amenée à l'état initial par un réseau de décodeurs (1503 à 1508), qui contrôlent l'état, ramené à sa valeur initiale, de tous les étages de comptage du compteur synchrone.

15. Générateur optique de caractères suivant l'une des revendications 9 à 14, caractérisé par le fait que la mémoire de valeurs de correction (332) de l'unité de commande d'intervalles (332,333) est raccordée aux sorties parallèles du registre intermédiaire associé (331) du circuit partiel (33/0,33/1,33/2 ou 33/3) pour réaliser le chargement, bit-par-bit, de valeurs de correction actualisées (Ki) qui sont transférées, au cours d'un cycle de charge, dans les unités de commande (3), et que l'unité de commande d'intervalles possède respectivement une entrée d'autorisation (EN), à laquelle est envoyé, pour l'autorisation du transfert bit-à-bit des valeurs de correction, l'un des deux signaux de commande d'enregistrement (SWE21 à SWE25), qui sont produits dans l'unité de commutation (32) lors de l'apparition d'un signal de commande de charge (LD-EN) délivré par l'unité de commande (6) de l'imprimante.

16. Générateur optique de caractères suivant la revendication 15, caractérisé par le fait que l'unité de commutation (32) possède, dans l'hypothèse de valeurs de correction (Ki) à m chiffres, un autre circuit de décodage (328) servant à produire les seconds signaux de commande d'enregistrement (SWE20 à SWE25) et dans lequel il est prévu un décodeur (3281), auquel des signaux de commande temporels (SC7, SC8) possédant une période correspondant aux multiples d'une période du cycle sont envoyés pour déterminer m séquences successives de charge, caractérisées par des signaux de fenêtres (LDSQ0 à LDSQ3), et dans lequel il est prévu une autre unité de multiplexeur (3282), à laquelle le signal de commande de charge (LD-EN) est envoyé en tant que signal d'autorisation et le signal de commutation (CBE) est envoyé en tant que signal de sélection et qui possède plusieurs étages multiplexeurs 2 -à- 1, aux entrées desquels les signaux de sortie du décodeur sont appliqués par couples selon une permutation cyclique, de sorte que leurs sorties délivrent respectivement l'un des seconds signaux de commande d'enregistrement (SWE21 à SWE25), avec lesquels les différentes mémoires de valeurs de correction (331) des circuits partiels (33/0 à 33/1) peuvent être préparées, en fonction du signal de commutation, selon des séquences temporelles réciproquement inversées, pour réaliser la mémorisation bit-par-bit de valeurs de correction.

17. Générateur optique de caractères suivant l'une des revendications 8 à 16, caractérisé par le fait que dans l'unité de commutation (32) de chaque unité de commande (3), il est prévu, pour réaliser l'équilibrage, rapporté à cette unité, des courants dans l'unité à étages d'attaque (34), un dispositif de syntonisation (326,327), auquel est envoyée une tension de commande (V/I-LED) délivrée par l'unité de commande (6) de l'imprimante et qui, en fonction d'une valeur d'équilibrage précis, prévue individuellement pour le module formant étage d'attaque associé, corrige cette tension de commande et délivre un signal analogique (ASW), et qu'entre les circuits ET (334) et les entrées parallèles de l'unité formant étage d'attaque associée, il est prévu, dans chaque circuit partiel (33/0...33/3) de l'unité de traitement (3), des interrupteurs analogiques (336), aux entrées commandées desquels un signal analogique est envoyé en parallèle, et dont les entrées de commande sont raccordées respectivement à une sortie du circuit ET associé et dont les sorties délivrent respectivement l'un des signaux de commande (DS) à l'entrée respectivement associée de l'unité formant étage d'attaque.

18. Générateur optique de caractères suivant la revendication 17, caractérisé par le fait que le dispositif de syntonisation possède comme mémoire un registre (327) pouvant être chargé et qui peut être chargé au cours d'un cycle de charge, d'une manière déclenchée par un autre des signaux de commande d'enregistrement (SWE26), par une valeur d'équilibrage précis numérisée, et possède en outre un convertisseur numérique/analogique programmable (326), qui, en fonction de la valeur d'équilibrage précis lue à partir du registre, corrige la tension de commande (V/I-LED) envoyée par l'unité de commande (6) de l'imprimante.

19. Générateur optique de caractères suivant la revendication 17 ou 18, caractérisé par le fait que dans les circuits partiels (33/0...33/3) de l'unité de traitement (3), il est prévu, entre les circuits ET (334) et les interrupteurs analogiques (336), d'autres circuits ET (335), dont les premières entrées sont raccordées respectivement à une sortie du circuit ET (334) et aux secondes entrées duquel sont envoyés en parallèle, dans chaque circuit partiel, respectivement l'un d'autres signaux de commutation (SG0...SG3), que le premier circuit de décodage (324) de l'unité de commutation (32) produit pour réaliser la transmission commandée des signaux de commande (DS) aux étages d'attaque de l'unité à étages d'attaque associée (34).

# FIG 1

# FIG 2

FIG 3

**FIG 4**

FIG 5

EP 0 403 476 B1

# FIG 6

# FIG 7

FIG 8

# FIG 9

# FIG 12

FIG 10

FIG 11

EP 0 403 476 B1

**FIG 13**

CBO

ADD 7

CA 1
CA 2
CA 3
CA 4  } A
CA 5
CA 6
CA 7

3250

A = B

& SWE 10

& SWE 11

3251

& SWE 12

& SWE 13

C+MA 8

CB 1
CB 2
CB 3
CB 4  } B
CB 5
CB 6
CB 7

EN 0
EN 1
EN 2
EN 3

**FIG 14**

CBO
LD-EN

G 0
G 1
EN

3282

3281

SC 7

SC 8

0
1
2
3

LD SQ 0
LD SQ 1
LD SQ 2
LD SQ 3

0
1
0
1
0
1
0
1
0
1
0
1
0
1

SWE 20 (0/0 ; 1/0)
SWE 21 (2/0 ; 3/0)
SWE 22 (0/1 ; 1/1)
SWE 23 (2/1 ; 3/1)
SWE 24 (0/2 ; 1/2)
SWE 25 (2/2 ; 3/2)
SWE 26

33

FIG 15